# EUROPÄISCHE PATENTSCHRIFT

(11) **EP 1 557 691 B1**
(45) Veröffentlichungstag und Bekanntmachung des Hinweises auf die Patenterteilung: **27.05.2009**
(21) Anmeldenummer: 05001243.4
(22) Anmeldetag: 21.01.2005
(51) Int. Cl.: G01S 17/93, G01S 7/48

(54) **Verfahren zur Erkennung von Markierungen auf einer Fahrbahn**
Method for recognizing markings on a road
Procédé de détection des marquages sur une chaussée

(30) Priorität: 26.01.2004 DE 102004003850
(43) Veröffentlichungstag der Anmeldung: 27.07.2005
(73) Patentinhaber: IBEO Automobile Sensor GmbH, 22179 Hamburg (DE)
(72) Erfinder: Fürstenberg, Kay, 89075 Ulm (DE); Kämpchen, Nico, 89081 Ulm (DE); Lages, Ulrich, Dr., 21031 Hamburg (DE); Dietmayer, Klaus, Prof. Dr., 89075 Ulm (DE); Willhoeft, Volker, 22303 Hamburg (DE)
(74) Vertreter: Manitz, Finsterwald & Partner GbR

(56) Entgegenhaltungen:
- DE-A1- 10 127 204
- DE-A1- 10 141 294
- DE-A1- 19 954 362
- KIRCHNER A ET AL: "Integrated obstacle and road tracking using a laser scanner" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 675-681, XP010529016 ISBN: 0-7803-6363-9
- WILLEHOEFT, VOLKER ET AL: "Lane and road detection using video and laserscanner data" ITS 2003, 10TH WORLD CONGRESS ON INTELLIGENT TRANSPORT SYSTEMS, [Online] November 2003 (2003-11), XP002324651 Gefunden im Internet: URL:http://www.ibeo-as.de/pdf/030830_ITS03 _Final_TRW_IBEO_AS.pdf> [gefunden am 2005-04-12]
- PATENT ABSTRACTS OF JAPAN Bd. 1997, Nr. 01, 31. Januar 1997 (1997-01-31) & JP 08 248133 A (OMRON CORP), 27. September 1996 (1996-09-27)

## Beschreibung

Die vorliegende Erfindung betrifft ein Verfahren zur Erkennung von Markierungen und insbesondere Fahrspuren auf einer Fahrbahn. Ein Verfahren mit den Merkmalen des Oberbegriffs des Anspruchs 1 ist aus der DE 199 54 362 A1 bekannt.

Kraftfahrzeuge sollen in Zukunft zunehmend mit Systemen ausgestattet werden, die eine Überwachung eines Bereichs vor dem Kraftfahrzeug gestatten, um Gefahrensituationen erkennen und gegebenenfalls automatisch Warnsignale für den Kraftfahrzeugführer abgeben oder Eingriffe in die Kraftfahrzeugsteuerung einschließlich von Bremsmanövern vornehmen zu können. Eine weitere Anwendung solcher Systeme könnte darin bestehen, auch in normalem Verkehr wenigstens teilweise die Kraftfahrzeugsteuerung, beispielsweise die Lenkung und/oder die Beschleunigung bzw. Verzögerung, zu beeinflussen.

Eine Fahrsituation von besonderem Interesse ist die Fahrt auf mehrspurigen Straßen, beispielsweise Bundesstraßen oder Autobahnen. Ein wesentliches Kennzeichen dieser Fahrsituation besteht in der Aufteilung der Fahrbahn in Fahrspuren. Diese Aufteilung erfolgt in der Regel durch Fahrspurmarkierungen, die flächig auf die Fahrbahnoberfläche aufgebracht sind und ein höheres Reflexionsvermögen aufweisen als die nicht gekennzeichnete bzw. markierte Fahrbahnoberfläche. Als Fahrspurmarkierungen können insbesondere retroreflektierende Materialen verwendet werden. Diese Fahrspurmarkierungen sind jedoch nicht einfach automatisch zu erkennen.

Auf Fahrbahnen befinden sich aber neben Fahrspurmarkierungen häufig noch andere Markierungen, die ebenfalls hinweisende Funktion haben. Es wäre wünschenswert auch solche Markierungen automatisch erkennen zu können.

Der Erfindung liegt die Aufgabe zugrunde, ein Verfahren bereitzustellen, das eine gute Erkennung von Markierungen, insbesondere Fahrspurmarkierungen und vorzugsweise Fahrspuren, auf einer Fahrbahn vor dem Fahrzeug erlaubt.

Die Aufgabe wird gelöst durch ein Verfahren mit den Merkmalen des Anspruchs 1.

Bei dem erfindungsgemäßen Verfahren zur Erkennung von Markierungen auf einer Fahrbahn auf der Basis von in zeitlicher Folge von wenigstens einem an einem Fahrzeug gehaltenen Sensor für elektromagnetische Strahlung, insbesondere einem Laserscanner, erfassten Abstandsbildern eines Erfassungsbereichs des Sensors, den eine Oberfläche der Fahrbahn schneidet, werden wenigstens einer der Markierungen entsprechende Abstandsbildpunkte wenigstens eines der Abstandsbilder ermittelt und eine Lage und/oder Form der Markierung auf der Basis der der Markierung entsprechenden Abstandsbildpunkte geschätzt.

Unter einem Abstandsbild eines Sensors zur Erfassung elektromagnetischer Strahlung, das häufig auch als tiefenaufgelösten Bild oder Entfernungsbild bezeichnet wird, wird eine Menge von bei einer Abtastung des Erfassungsbereichs des Sensors erfassten Bildpunkten verstanden, denen Punkte bzw., je nach Auflösung des Sensors, auch Bereiche eines von dem Sensor erfassten Gegenstands entsprechen. Die Bildpunkte umfassen dabei wenigstens der Lage der zugehörigen Gegenstandspunkte bzw. -bereiche entsprechende Koordinaten zur Definition einer Lage relativ zu dem Sensor wenigstens in einer Fläche, vorzugsweise einer Ebene, die nicht orthogonal zu einer Blickrichtung des Sensors steht. Aus den Koordinaten kann insbesondere der Abstand der Gegenstandspunkte bzw. -bereiche von dem Sensor ermittelbar sein. Die Bildpunkte können weiterhin Daten über weitere, insbesondere optische, Eigenschaften der Gegenstandspunkte, beispielsweise deren Reflektivität, enthalten. Dabei können Regionen des Erfassungsbereichs, in denen keine Gegenstände vorhanden sind, je nach Sensor trotzdem Bildpunkte zugeordnet sein, die dann entsprechend gekennzeichnet sein können.

Sensoren für elektromagnetische Strahlung zur Erfassung solcher Abstandsbilder sind grundsätzlich bekannt. Bei diesem kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Videokameras aufgenommenen Abtastdaten in Abstandsbilder aufweisen.

Vorzugsweise werden jedoch Laserscanner verwendet, die bei einer Abtastung einen Erfassungsbereich mit mindestens einem gepulsten Strahlungsbündel abtasten, das einen vorgegebenen Winkelbereich, vorzugsweise mit einer Schwenkbewegung, überstreicht und von einem Punkt bzw. Bereich eines Gegenstands, meist diffus, zurückgeworfene Strahlungspulse des Strahlungsbündels detektieren. Dabei wird zur Entfernungsmessung die Laufzeit der ausgesandten und zurückgeworfenen Strahlungspulse erfasst. Die so erfassten Abtastdaten für einen Bildpunkt können dann als Koordinaten den Winkel, bei dem der zurückgeworfene Puls erfasst wurde, und die aus der Laufzeit der Strahlungspulse bestimmte Entfernung des Gegenstandspunktes bzw. -bereichs von dem Laserscanner enthalten. Bei der Strahlung kann es sich insbesondere um sichtbares oder infrarotes Licht handeln.

Der Sensor erfasst dabei die Abstandsbilder in zeitlicher, vorzugsweise zeitlich äquidistanter Folge, wobei die Bildpunkte innerhalb eines einzelnen Bildes nicht unbedingt nacheinander erfasst zu werden brauchen.

Bei der Umsetzung der Abtastdaten in Bildpunkte können weiterhin Korrekturen, zum Beispiel in Bezug auf die Bewegung des Sensors, vorgenommen werden, jedoch ist dies nicht notwendig.

Grundsätzlich kann der Erfassungsbereich beliebig relativ zu dem Fahrzeug angeordnet sein. Vorzugsweise kann er sich wenigstens in einen Bereich hinter dem Fahrzeug erstrecken. Besonders bevorzugt erstreckt er sich wenigstens in einen Bereich vor dem Fahrzeug. Dabei wird unter einem Bereich vor dem Fahrzeug insbesondere ein Bereich verstanden, der in Vorwärtsrichtung bzw. Fahrtrichtung vor dem Fahrzeug liegt. Die Vorwärtsrichtung kann dabei insbesondere parallel zur Längsachse des Fahrzeugs ausgerichtet sein.

Der Sensor ist zum einen so ausgerichtet, dass sich der Erfassungsbereich des Sensors und die Fahrbahnoberfläche in einem relativ zu dem Fahrzeug vorgegebenen Bereich, vorzugsweise vor dem Fahrzeug, schneiden, so dass Punkte bzw. Bereiche auf der Fahrbahnoberfläche und insbesondere Markierungen auf der Fahrbahnoberfläche erfassbar sind.

Erfindungsgemäß werden Markierungen auf einer Fahrbahn erkannt. Die Markierungen können dabei insbesondere durch auf die Fahrbahnoberfläche flächig aufgebrachte Markierungen, beispielsweise in Form von Streifen, oder auch in der Fahrbahn gehaltene Markierungsnägel, insbesondere mit Reflektoren, gegeben sein.

Erfindungsgemäß werden wenigstens einer solchen Markierung entsprechende Abstandsbildpunkte wenigstens eines der Abstandsbilder ermittelt. Dabei wird die Eigenschaft der Markierungen verwendet, auf sie auftreffende, von dem Sensor verwendete elektromagnetische Strahlung mit einer anderen Intensität und/oder auf andere Weise zurückzuwerfen als diejenigen Bereiche der Fahrbahnoberfläche, die keine Markierungen aufweisen. Insbesondere kann der Erfassungsbereich des Sensors so ausgerichtet sein, dass bei normaler Lage des Fahrzeugs auf einer ebenen Fahrbahn, Bereiche auf der Fahrbahnoberfläche ohne Markierungen aufgrund zu geringer Intensität der davon zurückgeworfenen elektromagnetischen Strahlung von dem Sensor nicht erfasst werden, während Markierungen noch genügend Intensität zurückwerfen, um noch von dem Sensor erfasst zu werden.

Da die Abstandsbildpunkte die Lage der erfassten Bereiche der Fahrbahnoberfläche bzw. der Markierungen wiedergeben, kann einfach die Lage und/oder Form der Markierung ermittelt werden, ohne dass in einer Ebene orthogonal zu der Längsachse des Fahrzeugs erfasste Videobilder von Szenen vor dem Fahrzeug interpretiert werden müssen.

Das erfindungsgemäße Verfahren kann vorzugsweise zyklisch durchgeführt werden, wobei in jedem Zyklus wenigstens ein aktuell erfasstes Abstandsbild verarbeitet wird.

Weiterbildungen und bevorzugte Ausführungsformen der Erfindung sind in den Unteransprüchen, der Beschreibung und der Zeichnung beschrieben.

Zur Ermittlung der einer Markierung auf einer Fahrbahn entsprechenden Abstandsbildpunkte können zunächst aus einem Abstandsbild solche Abstandsbildpunkte ausgewählt werden, die überhaupt zur Ermittlung von Markierungen in Frage kommen.

Dazu können verschiedene Kriterien alternativ oder kumulativ verwendet werden. Insbesondere kann zumindest implizit die Eigenschaft der Markierungen verwendet werden, auf sie auftreffende, von dem Sensor verwendete elektromagnetische Strahlung mit einer anderen Intensität und/oder auf andere Weise zurückzuwerfen als die Fahrbahnoberfläche, auf die die Markierung aufgebracht bzw. auf der die Markierung gehalten ist.

So ist es bevorzugt, dass zur Ermittlung von Markierungen nur solche Abstandsbildpunkte verwendet werden, deren Abstand von einem in seiner Relativlage zu dem Sensor festen Bezugspunkt oder einer quer zu einer Längsrichtung des Fahrzeugs verlaufenden, in ihrer Relativlage zu dem Sensor festen Bezugskurve jeweils einen vorgegebenen unteren Grenzwert überschreitet. Bei der Bezugskurve kann es sich insbesondere um eine Gerade handeln. Der untere Grenzwert ist dabei vorzugsweise so festgelegt, dass von der Fahrbahnoberfläche zurückgeworfene elektromagnetische Strahlung, die von dem Sensor verwendet wird, nicht mit einer so großen Intensität zurückgeworfen wird, dass sie noch von dem Sensor erfassbar ist, während von Markierungen auf der Fahrbahn in einem Abstand von dem Bezugspunkt bzw. der Bezugskurve wenigstens nahe dem unteren Grenzwert zurückgeworfene Strahlung noch von dem Sensor erfassbar ist. Bei dem Bezugspunkt kann es sich insbesondere um einen als Koordinatensystemursprung eines zur Darstellung der Abstandsbildpunkte verwendeten Sensorkoordinatensystems handeln, der beispielsweise nahe einer mittleren Lage eines für elektromagnetische Strahlung empfindlichen Empfangs- bzw. Photodetektionselements des Sensors angeordnet sein kann. Als Bezugskurve kann insbesondere eine quer zur Längsrichtung des Fahrzeugs ausgerichtete Achse des Sensorkoordinatensystems verwendet werden. Zur Festlegung des unteren Grenzwertes wird vorzugsweise von Markierungen ausgegangen, die in einer vorgegebenen geographischen Region typischerweise verwendet werden und einen typischen Zustand nach einer vorgegebenen Mindestnutzungsdauer bzw. Dauer der Exposition auf einer Straße und bei einer typischen mittleren Verschmutzung aufweisen.

Um die zur Ermittlung der Markierungen zu verwendenden Abstandsbildpunkte zu erhalten, ist es dann bevorzugt, dass der Sensor so ausgerichtet ist, dass dessen Erfassungsbereich bei normaler Lage des Fahrzeugs auf einer ebenen Fahrbahn frühestens in einem dem unteren Grenzwert entsprechenden Abstand die Fahrbahnoberfläche trifft.

Alternativ ist es bevorzugt, dass für Abstandsbildpunkte geprüft wird, ob deren Abstand von dem Bezugspunkt oder der Bezugskurve den unteren Grenzwert überschreitet. Besonders bevorzugt wird dann der untere Grenzwert so gewählt, dass bei einem Nicken des den Sensor tragenden Fahrzeugs, das im Betrieb auftreten kann, gegebenenfalls erfasste Abstandsbildpunkte auf der normalen Fahrbahnoberfläche ohne Markierungen nicht zur Ermittlung von Markierungen verwendet werden.

Zur Erkennung von Fahrspurmarkierungen können weiterhin Annahmen über den Verlauf der Markierungen getroffen werden. Insbesondere kann angenommen werden, dass beispielsweise Fahrspurmarkierungen wenigstens nahe dem Fahrzeug näherungsweise geradlinig in Längsrichtung des Fahrzeugs verlaufen. Es ist dann bevorzugt, dass zur Ermittlung von Markierungen nur solche Abstandsbildpunkte verwendet werden, deren Abstand von einem in seiner Relativlage zu dem Sensor festen Bezugspunkt oder einer quer zu einer Längsrichtung des Fahrzeugs verlaufenden, in ihrer Relativlage zu dem Sensor festen Bezugskurve einen vorgegebenen oberen Grenzwert unterschreitet. Der obere Grenzwert wird vorzugsweise so gewählt, dass bei typischen Verläufen von Straßen Fahrspurmarkierungen näherungsweise als Geraden darstellbar sind. Die Bezugskurve kann insbesondere eine Gerade sein, bei der es sich, wie bei dem zuvor erwähnten Kriterium, um eine Achse eines Sensorkoordinatensystems handeln kann.

In dem Erfassungsbereich des Sensors können Gegenstände vorhanden sein, die sich auf bzw. über der Fahrbahnoberfläche befinden. Diese können jedoch die Ermittlung der Markierungen aus den Abstandsbildern behindern. Es ist daher bevorzugt, dass zur Ermittlung von Markierungen nur Abstandsbildpunkte verwendet werden, die entsprechend wenigstens einem vorgegebenen Kriterium Punkten oder Bereichen auf der Fahrbahnoberfläche oder Bodenbereichen neben der Fahrbahn entsprechen. Solche Abstandsbildpunkte können mit verschiedenen Verfahren ermittelt werden. Insbesondere kann hierzu bei Verwendung von Sensoren mit gepulsten Abtaststrahlenbündeln, bei denen zur Abstandsbestimmung die Laufzeit der Pulse vom Sensor zu einem Gegenstand und zurück zum Sensor bestimmt wird, die Veränderung der Pulsform und/oder der Pulsamplituden, -höhe oder -fläche verwendet werden, die auftritt, wenn der Puls auf eine Fläche trifft, die mit der Ausbreitungsrichtung des Pulses einen spitzen Winkel einschließt, d.h. auf die der Puls fast streifend auftritt. Ein solches Verfahren ist beispielsweise in der am 23. August 2001 eingereichten deutschen Patentanmeldung der Anmelderin mit dem amtlichen Aktenzeichen DE 101 41 294 A1 und dem Titel "Verfahren zur Bodenerkennung" beschrieben, deren Inhalt hiermit durch Bezugnahme in die Beschreibung aufgenommen wird. Dabei kann zur Auswertung insbesondere die Breite des von dem Sensor empfangenen Pulses bei einem vorgegebenen Pegel, vorzugsweise in Kombination mit einer die Energie des zurückgeworfenen Pulses wiedergebenden Eigenschaft des empfangenen Pulses wie beispielsweise dessen maximaler Pegel oder dessen Pulsfläche, verwendet werden. Dann können in Verbindung mit dem bekannten Abstand des den Puls zurückwerfenden Punktes bzw. Bereichs sowohl Angaben über die Neigung des Bereichs gegenüber der Ausbreitungsrichtung des Pulses und in Ausbreitungsrichtung des Pulses als auch über die Reflektivität des Bereichs ermittelt werden.

Bei einer Nickbewegung eines Fahrzeugs können von einem daran gehaltenen Laserscanner entlang einer Kurve quer zur Fahrtrichtung angeordnete Abstandsbildpunkte erfasst werden, die keinen Markierungen auf der Fahrbahn entsprechen. Solche Abstandsbildpunkte können die Ermittlung von Markierungen auf der Fahrbahn stören. Es ist daher bevorzugt, dass unter den Abstandsbildpunkten solche Abstandsbildpunkte ermittelt werden, die von dem Sensor erfassten Punkten oder Bereichen auf der Fahrbahnoberfläche entsprechen, die keine Markierungen sind, und dass die so ermittelten Abstandsbildpunkte nicht zur Erkennung der Markierungen herangezogen werden.

Zur Ermittlung solcher Bildpunkte ist es bevorzugt, dass die Abstandsbildpunkte durch Abtastung des Erfassungsbereichs mit einem geschwenkten Strahlenbündel elektromagnetischer Strahlung erhalten wurden, und dass zur Ermittlung der keiner Markierung entsprechenden Abstandsbildpunkte solche Abstandsbildpunkte ermittelt werden, die entlang einer Kurve auf der Fahrbahnoberfläche angeordnet sind, auf der ein Mittelstrahl des Strahlenbündels bei der Schwenkbewegung die Fahrbahnoberfläche trifft. Wird zur Erfassung der Abstandsbilder ein geeigneter Laserscanner verwendet, so kann die Kurve in einem schmalen Schwenkwinkelbereich insbesondere durch eine Gerade approximiert werden. Es ist dann zur Ermittlung von Fahrspurmarkierungen besonders bevorzugt, dass Abstandsbildpunkte ermittelt werden, die entlang einer Geraden quer zur Fahrtrichtung oder einer Längsachse des Fahrzeugs angeordnet sind, und dass die so ermittelten Abstandsbildpunkte nicht zur Ermittlung der Markierungen herangezogen werden. Zur Ermittlung solcher Abstandsbildpunkte kann vorzugsweise in einer Verteilung der Positionen der Abstandsbildpunkte in der Richtung parallel zu der Längsrichtung und/oder Fahrtrichtung des Fahrzeugs nach Häufungen bzw. Peaks gesucht werden. Die Verteilung der Positionen kann insbesondere dadurch erhalten werden, dass die Komponenten von Lagekoordinaten der Abstandsbildpunkte in der Richtung parallel zu der Längsachse des Fahrzeugs in aneinander angrenzende Intervalle bzw. "Bins" entlang der Längsachse eingeordnet werden, so dass bei einer graphischen Veranschaulichung ein Histogramm entsteht. Dieses Verfahren ermöglicht insbesondere bei Verwendung eines kartesischen Koordinatensystems, in dem die Abstandsbildpunkte gegeben sind und dessen eine Achse parallel zu der Längsachse und/oder Fahrtrichtung des Fahrzeugs ausgerichtet ist, eine sehr einfache und schnelle Ermittlung der quer zur Längsrichtung entlang einer Geraden angeordneten Abstandsbildpunkte, die nicht zur Erkennung von Markierungen herangezogen werden.

Weiterhin können Abstandsbildpunkte, die zur Ermittlung von Markierungen herangezogen bzw. ausgewählt werden, auch dadurch erkannt werden, dass die optischen Eigenschaften der Markierungen selbst ausgenutzt werden. Es ist dazu bevorzugt, dass die Abstandsbilder durch Aussendung von elektromagnetischen Pulsen und Empfang entsprechender, von einem Gegenstand und insbesondere der Fahrbahnoberfläche oder einer Markierung auf dieser zurückgeworfener Pulse ermittelt werden, wobei wenigstens einem Abstandsbildpunkt wenigstens eine Angabe in Bezug auf wenigstens eine von Eigenschaften des Gegenstands abhängige Eigenschaft des zurückgeworfenen Pulses zugeordnet ist, und dass zur Ermittlung derjenigen Abstandsbildpunkte, die Markierungen entsprechen, die wenigstens eine Eigenschaft des Pulses verwendet wird.

Dabei ist es besonders bevorzugt, dass als Eigenschaft von zurückgeworfenen Pulsen deren Breite und/oder deren Höhe und/oder deren Fläche verwendet wird. Die zurückgeworfenen Pulse werden auch als Echopulse bezeichnet. Die Breite eines Pulses bezieht sich dabei auf den zeitlichen Verlauf der Intensität bzw. Leistung des Pulses. Als Echopulsbreite kann dabei insbesondere die absolute Breite des Echopulses verwendet werden, unter der der Abstand von zwei Zeitpunkten verstanden wird, zu denen der Echopuls einen vorgegebenen Pegel annimmt bzw. über- oder unterschreitet. Die Verwendung der absoluten Echopulsbreite hat den Vorzug, dass diese bei Verwendung bekannter Laserscanner einfach ermittelt werden kann.

Die Pulsbreite hängt zum einen von der Neigung des Bereichs, der den Puls zurückwirft, gegenüber der Strahlrichtung ab. Dieser Einfluss der Neigung ist in der oben genannten deutschen Patentanmeldung DE 101 41 294 A1 beschrieben. Zum anderen hängt die Echopulsbreite von der Reflektivität des erfassten Bereichs ab. Vorzugsweise wird daher neben der absoluten Echopulsbreite auch noch eine Eigenschaft des Echopulses erfasst, aus der in Verbindung mit der Kenntnis des ausgesandten Pulses die Reflektivität wenigstens näherungsweise ableitbar ist, beispielsweise die Echopulsfläche oder die maximale Intensität des Echopulses.

Durch Nickbewegungen des Fahrzeugs kann der einem Abstandsbild entsprechende Erfassungsbereich so nahe vor dem Fahrzeug auf den Boden bzw. die Fahrbahn geschwenkt werden, dass Markierungen auf der Fahrbahn nicht oder nicht in genügender Weise, d.h. nicht als als solche erkennbar, erfasst werden. Es ist daher bevorzugt, dass wenigstens zwei Abstandsbilder von wenigstens zwei parallel oder in einem spitzen Winkel zueinander verlaufenden Erfassungsbereichen verwendet werden, die im Wesentlichen synchron erfasst wurden, und dass die Abstandsbildpunkte der beiden Abstandsbilder in Bezug auf die Markierungserkennung gemeinsam wie Abstandsbildpunkte eines einzigen Abstandsbildes behandelt werden. Vorzugsweise berühren sich die Erfassungsbereiche, jedoch können sie sich auch überlappen oder ganz voneinander getrennt sein. Die Abstandsbildpunkte der beiden Abstandsbilder werden daher gewissermaßen zu einem Gesamtabstandsbild überlagert, in dem dann nach Markierungen auf der Fahrbahn gesucht wird. Bei einem Nicken des Fahrzeugs, insbesondere bei einer starken Bremsung, können dann immer noch Markierungen entsprechende Abstandsbildpunkte aufgefunden werden. Die Abstandsbilder können durch wenigstens zwei im Wesentlichen synchron arbeitende Sensoren erfasst werden, vorzugsweise wird jedoch nur ein einziger Sensor zur synchronen Erfassung der Abstandsbilder eingesetzt. Ein solcher Sensor zur synchronen Erfassung solcher Abstandsbilder ist in der oben genannten Patentanmeldung DE 101 41 294 A1 beschrieben, deren Inhalt auch in Bezug auf den Sensor durch Bezugnahme in die Beschreibung aufgenommen wird.

Bedingt durch die häufig nur geringe Fläche von Markierungen auf Fahrbahnen können diese in einem einzelnen Abstandsbild nicht sehr ausgeprägt sein. Es ist daher bevorzugt, dass die Ermittlung von Markierungen in aufeinander folgenden Zyklen erfolgt, und dass zur Ermittlung der Markierung in einem aktuellen Zyklus Abstandsbildpunkte von wenigstens zwei aufeinander folgenden Abstandsbildern verwendet werden. Diese Vorgehensweise ist insbesondere bei der Fahrt auf mehrspurigen, nur wenig gekrümmt verlaufenden Straßen vorteilhaft, da beispielsweise Fahrspurmarkierungen dann in guter Näherung entlang Geraden verlaufen, entlang derer sich das Fahrzeug bewegt, und da dann die entsprechenden Abstandsbildpunkte beider Abstandsbilder entlang derselben Geraden angeordnet sind. Die Gerade und damit die Fahrspurmarkierung sind damit leichter erkennbar.

Dabei ist es besonders bevorzugt, dass wenigstens zur Ermittlung der Markierungen ausgewählte Abstandsbildpunkte wenigstens eines der Abstandsbilder in Bezug auf eine Eigenbewegung des Fahrzeugs relativ zu der Fahrbahn korrigiert werden. Dabei braucht nicht unbedingt eine Korrektur in Bezug auf alle Komponenten der Eigenbewegung des Fahrzeugs zu erfolgen. Besonders bevorzugt wird wenigstens eine Korrektur bezüglich der Orientierung der Längsachse des Fahrzeugs bzw. bezüglich Gierbewegungen des Fahrzeugs durchgeführt. Durch die Korrektur werden die Abstandsbildpunkte aus verschiedenen Zyklen wenigstens teilweise in ein gleiches Koordinatensystem transformiert, so dass sich die Anzahl der zur Erkennung von Markierungen auf der Fahrbahn zur Verfügung stehenden Bildpunkte erhöht.

Bei dem erfindungsgemäßen Verfahren können an sich beliebige Markierungen auf Fahrbahnen erkannt werden. Es ist jedoch bevorzugt, dass eine Form, die durch der Markierung entsprechende Abstandsbildpunkte gegeben ist, ermittelt und mit wenigstens einer vorgegebenen Form für Zeichen, insbesondere für Richtungen oder Geschwindigkeiten, verglichen wird. Solche Informationen wären mit Verfahren der Videobildverarbeitung auf der Basis von Videobildern des Erfassungsbereichs nicht einfach zu ermitteln.

Alternativ oder zusätzlich ist es bevorzugt, dass eine Form der Markierung, die durch der Markierung entsprechende Abstandsbildpunkte gegeben ist, ermittelt und daraufhin geprüft wird, ob sie eine Sperrfläche darstellt. Auf diese Weise können auch für den Fahrzeugverkehr gesperrte Sperrflächen, die beispielsweise in Form einer Insel durch auf die Fahrbahn aufgebrachte, den Umriss der Insel wiedergebende, reflektierende Streifen gekennzeichnet sind, einfach erkannt werden.

Bei den Markierungen auf der Fahrbahn kann es sich besonders bevorzugt um Fahrspurmarkierungen handeln, die wenigstens eine Fahrspur begrenzen, die zur Nutzung durch ein Kraftfahrzeug vorgesehen ist. Es ist daher alternativ oder zusätzlich bevorzugt, dass zur Erkennung von Fahrspurmarkierungen und insbesondere durch Fahrspurmarkierungen gegebenen Fahrspuren auf einer Fahrbahn Fahrspurmarkierungen entsprechende Abstandsbildpunkte wenigstens eines der Abstandsbilder ermittelt werden, und eine Lage und/oder ein Verlauf der Fahrspurmarkierungen und insbesondere der Fahrspuren auf der Basis der Fahrspurmarkierungen entsprechenden Abstandsbildpunkte geschätzt werden. Durch die Verwendung der Abstandsbilder kann so sehr einfach die Lage und Richtung von Fahrspurmarkierungen und - durch Untersuchung der Lagen der ermittelten Fahrspurmarkierungen relativ zueinander - auch von Fahrspuren ermittelt werden, ohne dass in einer Ebene orthogonal zu der Längsachse des Fahrzeugs erfasste Videobilder von Szenen vor dem Fahrzeug interpretiert werden müssen.

Zur Erkennung der Fahrspuren können aus Abstandsbildern insbesondere die nach den oben genannten Kriterien ermittelten Abstandsbildpunkte verwendet werden. Da als Markierungen auf einer Fahrbahn auch Haltelinien auftreten können, die quer zu Fahrspurmarkierungen auftreten, ist es besonders bevorzugt, dass unter den Abstandsbildpunkten solche Abstandsbildpunkte ermittelt werden, die von dem Sensor erfassten Punkten oder Bereichen auf der Fahrbahnoberfläche entsprechen, die keine Fahrspurmarkierungen sind, und dass die so ermittelten Abstandsbildpunkte nicht zur Erkennung der Fahrspurmarkierungen herangezogen werden. Insbesondere wenn das Verfahren zyklisch durchgeführt wird, ist es dazu bevorzugt, dass zur Ermittlung von nicht Fahrspurmarkierungen entsprechenden Abstandsbildpunkten nach solchen Abstandsbildpunkten gesucht wird, die entlang einer in einer Richtung quer zu wenigstens einer Fahrspurmarkierung in dem vorhergehenden Zyklus verlaufenden Kurve, insbesondere einer Geraden, angeordnet sind. Sind noch keine Fahrspurmarkierungen ermittelt, beispielsweise in einer Initialisierungsphase des Verfahrens, kann bei Kenntnis der Position und Ausrichtung des Fahrzeugs mittels einer digitalen Karte eine Schätzung der Richtung der Fahrspurmarkierungen erhalten werden, die zur Definition der Kurve dienen können.

Einzelne Fahrspurmarkierungen können aus den ausgewählten Abstandsbildpunkten auf verschiedene Art und Weise erkannt werden.

Bei einer Variante des erfindungsgemäßen Verfahrens ist es bevorzugt, dass zur Erkennung von Fahrspurmarkierungen eine Hough-Transformation, vorzugsweise zur Bestimmung von Geraden, verwendet wird. Die Hough-Transformation, unter der auch Verallgemeinerungen des ursprünglich von Hough in US 3 069 654 offenbarten Verfahrens verstanden werden, ist in der Bildverarbeitung grundsätzlich bekannt (vgl. etwa Haberäcker, P., "Praxis der digitalen Bildverarbeitung und Musterkennung", Carl Hanser Verlag, München, 1995, sowie Bräunl, Thomas, Feyer, Stefan, Rapf, Wolfgang, Reinhardt, Michael, "Parallele Bildverarbeitung; Addison-Wesley, Bonn 1995, Seite IX, 205 und Jähne, Bernd, "Digitale Bildverarbeitung", Springer Verlag, Berlin 1991) und dient dort dazu, in Videobildern vorgegebene, geometrische Gebilde und insbesondere Geraden aufzufinden. Der Vorteil dieser Variante besteht darin, dass Fahrspurmarkierungen, insbesondere geradlinige Fahrspurmarkierungen, unabhängig von ihrer Richtung einfach erkannt werden können.

In vielen Situationen, beispielsweise bei einer Fahrt auf einer Autobahn, wird sich das Fahrzeug im Wesentlichen entlang der Fahrspurmarkierungen bewegen. Es ist dann bevorzugt, dass die Verteilung der Lagen von zur Ermittlung von Fahrspurmarkierungen ausgewählten Abstandsbildpunkten in Richtungen entlang einer nicht parallel zu einer Längsachse des Fahrzeugs verlaufenden Ermittlungskurve ausgewertet wird. Bei den ausgewählten Abstandsbildpunkten kann es sich um alle Abstandsbildpunkte des Abstandsbildes handeln, vorzugsweise werden jedoch nur die nach den oben genannten Kriterien ausgewählten Abstandsbildpunkte verwendet. Diese Verteilung wird im Bereich der Fahrspurmarkierungen Häufungen aufweisen.

Die Ermittlungskurve kann prinzipiell beliebig verlaufen, solange sie nicht insgesamt parallel zu der Längsachse des Fahrzeugs verläuft. Vorzugsweise wird eine Gerade verwendet.

Bei einer Variante des erfindungsgemäßen Verfahrens ist es bevorzugt, dass die Ermittlungskurve eine quer zur Längsachse des Fahrzeugs verlaufende Gerade ist. Da die Lage dieser Achse in Bezug auf das Fahrzeug und damit den Sensor fest ist, ergibt sich eine besonders einfache Ermittlung der Ermittlungskurve.

Alternativ ist es bevorzugt, dass die Erkennung von Fahrspurmarkierungen wiederholt in aufeinander folgenden Zyklen durchgeführt wird, und dass eine Ermittlungskurve verwendet wird, die in einer Richtung quer zu wenigstens einer der Fahrspurmarkierungen in einem vorhergehenden Zyklus verläuft. Diese Alternative ermöglicht eine gute Fahrspurerkennung auch während eines Spurwechsels des den Sensor tragenden Fahrzeugs.

Weiterhin ist es bevorzugt, dass die Ermittlungskurve so gewählt wird, dass die Häufungen in der Verteilung besonders stark ausgeprägt sind. Dazu kann, ausgehend von einer wie in beiden zuvor genannten Alternativen gewählten Ermittlungskurve, die Ermittlungskurve beispielsweise so gedreht werden, dass die Weiten der Häufungen entlang der Ermittlungskurve besonders schmal und die Häufungen damit besonders ausgeprägt sind.

Es ist dabei besonders bevorzugt, dass einer Fahrspurmarkierung entsprechende Abstandsbildpunkte dadurch erkannt werden, dass Häufungen von Projektionen von Abstandsbildpunkten auf die Ermittlungskurve ermittelt werden. Bei Verwendung eines kartesischen Koordinatensystems zur Angabe der Koordinaten der Abstandsbildpunkte kann die Projektion durch die entsprechenden Komponenten der Abstandsbildpunkte gegeben sein, wenn als Ermittlungskurve eine Senkrechte auf die Längsachse und/oder die Fahrtrichtung des Fahrzeugs gewählt wird und diese Komponenten dann gerade die Lage der Abstandsbildpunkte in der Richtung quer zu der Ermittlungskurve bzw. der Längsachse und/oder Fahrtrichtung des Fahrzeugs wiedergeben.

Die Lage und/oder der Verlauf der einer Häufung entsprechenden Fahrspurmarkierung kann dann aus den Abstandsbildpunkten, beispielsweise durch Ausgleichsverfahren wie einer linearen Regression, gewonnen werden, deren Projektion Element der Häufung ist bzw. in dieser liegt.

Dann ist es bevorzugt, dass zur Ermittlung von Häufungen die Anzahlen der Projektionen der Abstandsbildpunkte in vorgegebenen, vorzugsweise aneinander angrenzenden, Intervallen entlang der Ermittlungskurve ermittelt werden. In einer graphischen Veranschaulichung entspricht dies einer Erstellung eines Histogramms, dessen Spitzen bzw. Peaks gerade Häufungen und damit die Lage der Fahrspurmarkierungen wiedergeben. Die Intervalle werden in diesem Zusammenhang auch häufig als "Bins" bezeichnet. Bei einer Anpassung der Ermittlungskurve kann dann insbesondere die Ermittlungskurve, besonders bevorzugt eine Gerade, so gedreht werden, dass die Breiten der sich ergebenden Peaks besonders gering werden.

Bei dieser Art der Auswertung können durch Fehlmessungen oder kleine Gegenstände auf der Fahrbahn Häufungen von Abstandsbildpunkten entstehen, die eine sehr geringe Anzahl von Abstandsbildpunkten aufweisen und nicht Fahrspurmarkierungen entsprechen. Es ist dann besonders bevorzugt, dass eine einer Fahrspurmarkierung entsprechende Häufung festgestellt wird, wenn die Anzahl der Projektionen der Abstandsbildpunkte in einem Intervall ein lokales Maximum der Verteilung ist und einen vorgegebenen Schwellwert übersteigt. Der Schwellwert kann dabei absolut beispielsweise in Abhängigkeit von zu erwartendem Rauschen durch Fehlmessungen oder auch nur relativ zu den auftretenden Anzahlen der größten Häufungen vorgegeben werden. Die Häufungen entsprechen dabei Peaks in der Verteilung.

Alternativ oder ergänzend ist es bevorzugt, dass eine einer Fahrspurmarkierung entsprechende Häufung nur festgestellt wird, wenn die Differenz der Anzahlen der Projektionen der Abstandsbildpunkte in benachbarten Intervallen einen vorgegebenen Schwellwert überschreitet.

Darüber hinaus können andere, dem Fachmann bekannte Verfahren zur Erkennung von Häufungen in diskreten Verteilungen verwendet werden.

Mit den bis hierhin genannten Verfahrensschritten können Abstandsbildpunkte ermittelt werden, die Fahrspurmarkierungen entsprechen könnten. Prinzipiell kann jedoch der Fall eintreten, dass Abstandsbildpunkte auf der Basis wenigstens eines der zuvor genannten Kriterien als einer Fahrspurmarkierung entsprechend erkannt werden, dass dies jedoch tatsächlich nicht der Fall ist. Um solche Fehlinterpretationen möglichst weitgehend vermeiden zu können, ist es bevorzugt, dass wenigstens eine Menge von Abstandsbildpunkten ermittelt wird, die einer Fahrspurmarkierung entsprechen könnte, und dass unter Verwendung wenigstens eines Plausibilitätskriteriums entschieden wird, ob diese Menge der Abstandsbildpunkte einer Fahrspurmarkierung zugeordnet wird. Mögliche Plausibilitätskriterien könnten beispielsweise den Abstand benachbarter Fahrspurmarkierungen voneinander oder die Anzahl benachbarter Fahrspurmarkierungen betreffen. Solche Eigenschaften von Fahrspurmarkierungen bzw. Fahrspuren sind in vielen Staaten durch Verordnungen oder Gesetze festgelegt, so dass die Plausibilitätskriterien entsprechend gewählt werden können.

Insbesondere in diesem Zusammenhang ist es bevorzugt, dass ergänzend eine digitale Karte zur Ermittlung wenigstens einer der Fahrspurmarkierungen oder Fahrspuren verwendet wird. Dabei kann insbesondere eine Bestimmung der Position des Fahrzeugs mit GPS (Global Positioning System) und eine darauf folgende Ermittlung des jeweiligen Straßentyps an dieser Position durchgeführt werden. Anhand des Straßentyps können dann beispielsweise die mögliche Anzahl von Fahrspuren und/oder deren maximal mögliche Krümmungen festgestellt werden.

Prinzipiell genügt es bei dem erfindungsgemäßen Verfahren, nur ein Abstandsbild oder mehrere aufeinander folgende Abstandsbilder nach einer teilweisen oder vollständigen Eigenbewegungskorrektur auszuwerten, wobei jede Auswertung unabhängig von einer Auswertung in einem vorhergehenden Zyklus erfolgt. Um die Sicherheit der Auswertung zu verbessern ist es jedoch bevorzugt, dass für die Markierungen eine Objektverfolgung auf der Basis der Abstandsbilder durchgeführt wird. Durch dieses Vorgehen kann auf besonders einfache Weise eine sichere Zuordnung von aufgefundenen Abstandsbildpunktmengen, die einer Markierung, insbesondere einer Fahrspurmarkierung entsprechen könnten, zu in vorhergehenden Zyklen bereits erkannten Markierungen erfolgen. Eine solche Verfolgung von Markierungen entsprechenden Objekten ist insbesondere im Fall von Fahrspurmarkierungen sehr vorteilhaft, da unter anderem die Fahrspurmarkierungen häufig entlang der Fahrtrichtung bzw. Längsrichtung des Fahrzeugs über eine große Strecke verlaufen, so dass ihre Lage zum einen gut vorhersagbar ist und zum anderen ein in einem vorhergehenden Zyklus erkannter Fahrspurmarkierungsabschnitt mit hoher Wahrscheinlichkeit mit dem in einem aktuellen Zyklus zu erkennenden Abschnitt der Fahrspurmarkierung überlappt.

Die aktuelle Lage und die aktuellen Form der eigentlichen Markierung bzw. die aktuelle Lage und der aktuelle Verlauf der eigentlichen Fahrspurmarkierung kann dann aus der der Markierung, insbesondere Fahrspurmarkierung, zugeordnete Menge der Abstandsbildpunkte, im Fall von Fahrspurmarkierungen beispielsweise durch Ausgleichsverfahren wie eine lineare Regression, ermittelt werden.

Zu der Objektverfolgung ist es besonders bevorzugt, dass die Ermittlung von Markierungen, insbesondere Fahrspurmarkierungen, in aufeinander folgenden Zyklen erfolgt, dass in einem aktuellen Zyklus eine Menge von Abstandsbildpunkten ermittelt wird, die einer Markierung, insbesondere Fahrspurmarkierung, entsprechen könnten, dass auf der Basis der Lage und/oder Richtung einer in einem vorhergehenden Zyklus ermittelten, einer Markierungen, insbesondere Fahrspurmarkierung, entsprechenden Objekts die Lage der ermittelten Markierung, insbesondere Fahrspurmarkierung, bzw. des Objekts in dem aktuellen Zyklus vorhergesagt wird, und dass die Menge der Abstandsbildpunkte der ermittelten Markierung, insbesondere Fahrspurmarkierung, bzw. dem Objekt zugeordnet wird, wenn die Abstandsbildpunkte der Menge oder der Wert wenigstens eines aus diesen ermittelten Parameters ein vorgegebenes Kriterium erfüllen. Das Kriterium kann sich insbesondere auf die Form und/oder die Richtung der Verteilung der Abstandsbildpunkte der Menge und/oder die Lage der Abstandsbildpunkte der Menge in Bezug auf eine Richtung quer zur Längsachse des Fahrzeugs bzw. dessen Fahrtrichtung im Vergleich zu der in dem vorhergehenden Zyklus ermittelten Markierung, insbesondere Fahrspurmarkierung, bzw. dem entsprechenden Objekt beziehen.

Aus den erkannten bzw. ermittelten Markierungen, insbesondere Fahrspurmarkierungen, können weitere Informationen gewonnen werden.

Um eine Klassifizierung der Fahrspurmarkierungen und damit der Fahrspuren zu erleichtern, ist es bevorzugt, dass für wenigstens eine Fahrspurmarkierung eine Breite ermittelt wird. Diese Breite kann insbesondere dadurch ermittelt werden, dass die Streuung von einer Fahrspurmarkierung entsprechenden Abstandsbildpunkten um eine Ausgleichskurve durch diese Abstandsbildpunkte ermittelt wird.

Weiterhin ist es bevorzugt, dass für wenigstens eine ermittelte Fahrspurmarkierung ermittelt wird, ob diese durch eine durchgehende oder eine gestrichelte Linie gebildet wird. Auch diese Information erleichtert eine Klassifizierung.

Weiterhin ist es bevorzugt, dass Klassen für Fahrspuren und/oder Straßen vorgegeben werden, und dass wenigstens einer ermittelten Fahrspur und/oder einer Straße mit der ermittelten Fahrspur eine Klasse in Abhängigkeit von einer Eigenschaft der wenigstens einen ermittelten Fahrspur zugewiesen wird. Die Klassen für Fahrspuren können beispielsweise durch Vorgaben von Intervallen für typische Fahrspurbreiten und/oder Krümmungen definiert werden. Klassen für Straßen können beispielsweise durch die Art und/oder ein Intervall für die mögliche Breite und/oder die möglichen Relativlagen, insbesondere ein Intervall für mögliche Abstände der Fahrspurmarkierungen, und/oder Intervalle für die möglichen Krümmungen der Fahrspurmarkierungen gegeben sein. Diese Intervalle können insbesondere durch Verwaltungsvorgaben für den Straßenbau in der jeweiligen Region gegeben sein.

Weiterhin ist es bevorzugt, dass geprüft wird, ob ein Fahrspurwechsel erfolgt. Diese Prüfung, ob ein den Sensor zur Erfassung der Abstandsbilder tragendes Fahrzeug die Fahrspur wechselt, kann beispielsweise dadurch geschehen, dass über aufeinander folgende Zyklen, in denen jeweils Fahrspurmarkierungen unabhängig oder durch Objektverfolgung erkannt werden, die Bewegung der Fahrspurmarkierungen und insbesondere der entsprechenden Richtungen der Fahrspurmarkierungen überwacht wird. Bei einer Änderung, bei der sich beispielsweise die Orientierung aller erkannten Fahrspuren zu dem Fahrzeug bzw. Sensor ändert, kann dann auf einen Fahrspurwechsel geschlossen werden. Es kann jedoch auch nur die Lage des Sensors relativ zu der Fahrspurmarkierung bzw. einer Fahrspur geprüft werden.

Darüber hinaus ist es bevorzugt, dass in dem Abstandsbild Abstandsbildpunkte ermittelt werden, die einer quer zu einer Fahrspurmarkierung verlaufenden Haltelinie entsprechen. Zur Ermittlung solcher Abstandsbildpunkte kann insbesondere die bereits erwähnte Hough-Transformation verwendet werden. Es ist jedoch auch möglich, Häufungen von Projektionen von Abstandsbildpunkten auf eine parallel zu einer Fahrzeugslängsachse oder wenigstens einer Fahrspurmarkierung bzw. Fahrspur verlaufende Kurve, insbesondere Gerade, zu suchen, was analog zu der Ermittlung von Fahrspurmarkierungen erfolgen kann. Bei einer Ermittlung von Haltelinien wird vorzugsweise eine Elimination von Abstandsbildpunkten entlang einer Kurve auf der Fahrbahn, entlang derer ein zur Erfassung der Abstandsbildpunkte verwendetes Strahlenbündel geschwenkt wird, nicht durchgeführt.

Als eine Weiterbildung des erfindungsgemäßen Verfahrens ist es bevorzugt, dass auf der Basis erkannter Markierungen eine Kreuzung oder Einmündung erkannt wird. Hierzu können insbesondere quer zu Fahrspurmarkierungen verlaufende Markierungen, beispielsweise Haltelinien oder Fahrspurmarkierungen einer querenden Straße verwendet werden. Eine automatische Erkennung von Kreuzungen und Einmündungen kann insbesondere dazu verwendet werden, die Position des Sensors bzw. des diesen tragenden Fahrzeugs in Verbindung mit einer digitalen Karte zu ermitteln oder automatisch auf ein durch eine zu schnelle Annäherung an die Kreuzung oder die Einmündung gegebenes Gefahrenpotenzial hinzuweisen.

Weiterhin ist es bevorzugt, dass auf der Basis von aufeinander folgenden Abstandsbildern eines Bereichs wenigstens vor dem Fahrzeug eine Erkennung und/oder Verfolgung von Objekten durchgeführt wird, und dass aus dem Verlauf und/oder einer Eigenschaft der erkannten Fahrspurmarkierungen und unter Verwendung von Lagen und/oder Eigenschaften zusätzlicher bei der Objekterkennung und/oder -verfolgung erkannter Objekte eine Erkennung von provisorischen Änderungen des Fahrspur- oder Straßenverlaufs, insbesondere Baustellen, durchgeführt wird. Beispielsweise kann als Anzeichen für eine Baustelle eine Verengung der Fahrspuren oder eine plötzliche, starke Krümmung der Fahrspurmarkierungen verwendet werden. Insbesondere kann in den Abstandsbildern nach für solche provisorischen Änderungen des Fahrspurverlaufs, insbesondere Baustellen, charakteristischen Gegenständen bzw. Objekten gesucht werden. Bei diesen kann es sich insbesondere um Warnbaken, kegelförmige Pylone oder auch Barrieren handeln.

Um weitere möglichen Gefahrensituationen erkennen zu können, ist es weiterhin bevorzugt, dass auf der Basis von aufeinander folgenden Abstandsbildern eines Bereichs wenigstens vor dem Fahrzeug eine Erkennung und/oder Verfolgung von Objekten durchgeführt wird, und dass für anderen Fahrzeugen entsprechende Objekte geprüft wird, ob ein Spurwechsel wenigstens eines der anderen Fahrzeuge erfolgt.

Die ermittelten Markierungen, vorzugsweise die ermittelten Fahrspurmarkierungen, können darüber hinaus bei zusätzlicher Verwendung eines Videosystems mit einem Videosensor wie beispielsweise einer Videokamera zur laufenden Prüfung der Ausrichtung des Sensors relativ zu dem Videosensor verwendet werden, da die Markierungen und insbesondere Fahrspurmarkierungen jedenfalls bei hinreichender Beleuchtung sowohl mit dem Sensor als auch mit dem Videosensor erfassbar sind. Es ist daher bevorzugt, dass in einem im Wesentlichen synchron mit einem Abstandsbild erfassten Videobild von dem zur Erkennung von Markierungen verwendeten Fahrbahnbereich wenigstens einer Markierung entsprechende Merkmale ermittelt werden, und dass auf der Basis der aus den Abstandsbildern ermittelten Lage der Markierung und der Lage wenigstens eines entsprechenden Merkmals in wenigstens einem Videobild eine Relativlage und/oder -ausrichtung des Sensors zur Erfassung des Abstandsbildes zu einem Videobildsensor zur Erfassung des Entfernungsbildes überprüft und/oder ermittelt werden. Beispielsweise kann geprüft werden, ob die Fluchtpunkte von Fahrspurmarkierungen in dem Videobild konsistent mit den Lagen der entsprechenden ermittelten Fahrspuren sind.

Diese Prüfung braucht nicht unbedingt laufend durchgeführt zu werden, doch ist dies vorzugsweise der Fall. Dejustierungen durch Erschütterungen, kleine Schläge oder auch Temperatureffekte können so schnell erkannt und durch entsprechende Korrektur von Parametern einer Verarbeitung der Videobilder oder der Abstandsbilder ausgeglichen werden.

Weiterer Gegenstand der Erfindung ist ein Computerprogramm mit Programmcode-Mitteln, um das erfindungsgemäße Verfahren durchzuführen, wenn das Programm auf einen Computer ausgeführt wird. Unter einem Computer wird dabei jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird. Bei dem Datenträger kann es sich insbesondere um nichtflüchtige Speicher in Form von entsprechenden Halbleiterbauelementen, CDs, DVDs oder aus Disketten handeln.

Darüber hinaus ist Gegenstand der vorliegenden Erfindung eine Vorrichtung zur Erkennung von Markierungen auf einer Fahrbahn wenigstens vor einem Fahrzeug mit mindestens einem optoelektronischen Sensor, vorzugsweise einem Laserscanner, dessen Sichtbereich den Erfassungsbereich einschließt, und einer mit dem optoelektronischen Sensor verbundenen Datenverarbeitungseinrichtung, die zur Durchführung des erfindungsgemäßen Verfahrens ausgebildet ist.

Diese Datenverarbeitungseinrichtung kann insbesondere eine Einrichtung zur Ermittlung von Abstandsbildpunkten aus Abstandsbildern, die Fahrspurmarkierungen entsprechen, und eine Einrichtung zur Ermittlung einer Lage und/oder eines Verlaufs der Fahrspurmarkierungen aus den ermittelten Abstandsbildpunkten umfassen.

Weiterer Gegenstand der Erfindung ist ein Laserscanner, der insbesondere Teil der Vorrichtung zur Erkennung von Markierungen auf einer Fahrbahn wenigstens vor einem Fahrzeug sein kann, mit einer Strahlungsquelle zur Abgabe wenigstens eines Strahlungsbündels elektromagnetischer Strahlung, einer Ablenkeinrichtung, die eine Spiegeleinheit zur Bewegung des Strahlungsbündels durch einen Erfassungsbereich umfasst, die wenigstens eine spiegelnde Fläche aufweist und mit einem Antrieb um eine Dreh- oder Schwenkachse dreh- oder schwenkbar ist, und mit einer Empfangseinrichtung zum Empfang von Gegenständen zurückgeworfener Strahlung des Strahlungsbündels, wobei die dreh- oder schwenkbare Spiegeleinheit so ausgebildet ist oder dass wenigstens eine weitere spiegelnde Fläche der Ablenkeinrichtung so angeordnet und ausgebildet ist, dass bei einer Drehung bzw. Schwenkung der Spiegeleinheit in einem ersten vorgegebenen Winkelsektor um die Dreh- oder Schwenkachse das Strahlungsbündel entlang einer ersten Bewegungsfläche und bei einer Drehung bzw. Schwenkung der Spiegeleinheit in einem zweiten vorgegebenen Winkelsektor um die Dreh- oder Schwenkachse das Strahlungsbündel entlang einer zweiten Bewegungsfläche bewegt wird, wobei die erste und die zweite Bewegungsfläche sich bei einer Projektion entlang der Dreh- oder Schwenkachse aufeinander wenigstens teilweise überschneiden und im Überschneidungsbereich unterschiedliche Winkel mit der Dreh- oder Schwenkachse einschließen.. Die spiegelnden Flächen brauchen dabei nicht unbedingt eben zu sein. Die Bewegungsflächen können eben sein, jedoch braucht dies nicht der Fall zu sein.

Der erfindungsgemäße Laserscanner weist daher einen Erfassungsbereich auf, der sich aus zwei Teilen zusammensetzt, die sich wenigstens teilweise überschneiden können. Der erste Teil entsteht durch Drehung bzw. Schwenkung der Spiegeleinheit in dem ersten Winkelbereich und die entsprechende Bewegung des Laserstrahlungsbündels entlang der ersten Bewegungsfläche, der zweite Teil durch Drehung bzw. Schwenkung der Spiegeleinheit in dem zweiten Winkelbereich und die entsprechende Bewegung des Laserstrahlungsbündels entlang der zweiten Bewegungsfläche. Bei entsprechender Ausbildung der Ablenkeinrichtung und damit Lage der Bewegungsflächen kann insbesondere ein Erfassungsbereich mit zwei Abschnitten entstehen, die entsprechend der Lagen der Bewegungsflächen zueinander ebenfalls zueinander geneigt sind.

Dabei wird ausgenutzt, dass bei Laserscannern mit einer dreh- oder schwenkbaren Spiegeleinheit diese Spiegeleinheit, die beispielsweise als spiegelnde Fläche einen Planspiegel umfassen kann, und damit das Strahlungsbündel über einen größeren Winkelbereich geschwenkt werden kann als dies bei der Anbaulage an einem Fahrzeug, bei der die Dreh- oder Schwenkachse näherungsweise senkrecht zur Standfläche des Fahrzeugs orientiert ist, zur Abtastung eines Überwachungsbereiches vor dem Fahrzeug eigentlich notwendig wäre. Durch die erfindungsgemäße Ausbildung der Ablenkeinrichtung können einfach bei einer Drehung oder Schwenkung der Spiegeleinheit in einem ansonsten zur Erfassung nicht oder nur teilweise nutzbaren vorgegebenen zweiten Winkelsektor zusätzliche Teile der Fahrbahnoberfläche, insbesondere der Fahrbahnränder, mit nur einem Laserscanner erfasst werden, ohne den durch Bewegung der Spiegeleinheit in dem ersten vorgegebenen Winkelbereich und entsprechende Bewegung des Strahlungsbündels entlang der ersten Bewegungsfläche gegebenen Erfassungsbereich oberhalb der Fahrbahnoberfläche einzuschränken.

Dieser Effekt ist auf wenigstens drei Arten zu erreichen, die auch mit einander kombiniert werden können.

Insbesondere wenn keine weiteren spiegelnden Flächen verwendet werden, kann als spiegelnde Fläche der Spiegeleinheit ein entsprechend geformter, beispielsweise gewölbter, Spiegel verwendet werden. Zum anderen kann die Spiegeleinheit wenigstens zwei spiegelnde Flächen aufweisen, die entsprechend ausgebildet und/oder relativ zueinander angeordnet sind.

Als dritte Alternative kann die Ablenkeinrichtung die um die Dreh- oder Schwenkachse durch einen Antrieb drehbare Spiegeleinheit zur Bewegung, insbesondere zum Schwenken, des Strahlungsbündels und die weitere spiegelnde Fläche aufweisen, mittels derer das geschwenkte Strahlungsbündel bei Drehung bzw. Schwenkung in dem zweiten vorgegebenen Winkelsektor entlang der zweiten Bewegungsfläche ablenkbar ist. Vorzugsweise werden zwei weitere spiegelnden Flächen bzw. Spiegel verwendet, die an gegenüberliegenden Seiten des Laserscanners angeordnet sind.

Durch eine Drehung bzw. Schwenkung der Spiegeleinheit durch die beiden Winkelbereiche, vorzugsweise um 360°, können so bei Verwendung nur eines Antriebs und einer drehbaren Einheit wenigstens zwei gegeneinander geneigte Teile des Erfassungsbereichs des Laserscanners erfasst werden. Je nach Lage der Teile des Erfassungsbereichs kann sich eine Abtastung mit erhöhter Frequenz und/oder eine Vergrößerung des Erfassungsbereichs ergeben.

Bei den Bewegungsflächen, entlang derer das Strahlungsbündel bewegt wird, kann es sich insbesondere um Ebenen handeln. Weist das Strahlungsbündel keinen rotationssymmetrischen Querschnitt auf, kann dieser sich während der Bewegung entlang der Bewegungsfläche auch drehen.

Die Erfindung wird zwar vorzugsweise in Kraftfahrzeugen im Straßenverkehr eingesetzt, kann jedoch auch für autonome Fahrsysteme, bei denen Fahrzeuge durch Markierungen auf Fahrbahnen gelenkt werden, vorteilhaft eingesetzt werden.

Die Erfindung wird im Folgenden beispielhaft anhand der Zeichnungen noch weiter erläutert. Es zeigen:
- Fig. 1: eine schematische Draufsicht auf eine Szene mit einem Fahrzeug, an dem ein Laserscanner angebracht ist, und einem weiteren Fahrzeug auf einer Straße mit mehreren Fahrspuren im Gesamterfassungsbereich des Laserscanners,
- Fig. 2: eine schematische Seitenansicht des Fahrzeugs in Fig. 1 mit fächerartig übereinander angeordneten Teilerfassungsbereichen des Laserscanners,
- Fig. 3: ein schematisches Ablaufdiagramm eines Verfahrens zur Erkennung von Fahrspurmarkierungen und insbesondere Fahrspuren nach einer ersten bevorzugten Ausführungsform der Erfindung,
- Fig. 4: eine teilweise Darstellung eines Gesamtabstandsbildes von einem Teil einer Autobahn mit drei Fahrspuren und einem Standstreifen und eines Histogramms für die Verteilung von auf eine Richtung quer zur Längsrichtung des Fahrzeugs in Fig. 1 projizierten Abstandsbildpunkten des Abstandsbildes bei dem Verfahren nach Fig. 4, und
- Fig. 5: ein schematisches Ablaufdiagramm eines Verfahrens zur Erkennung von Fahrspurmarkierungen und insbesondere Fahrspuren nach einer zweiten bevorzugten Ausführungsform der Erfindung.

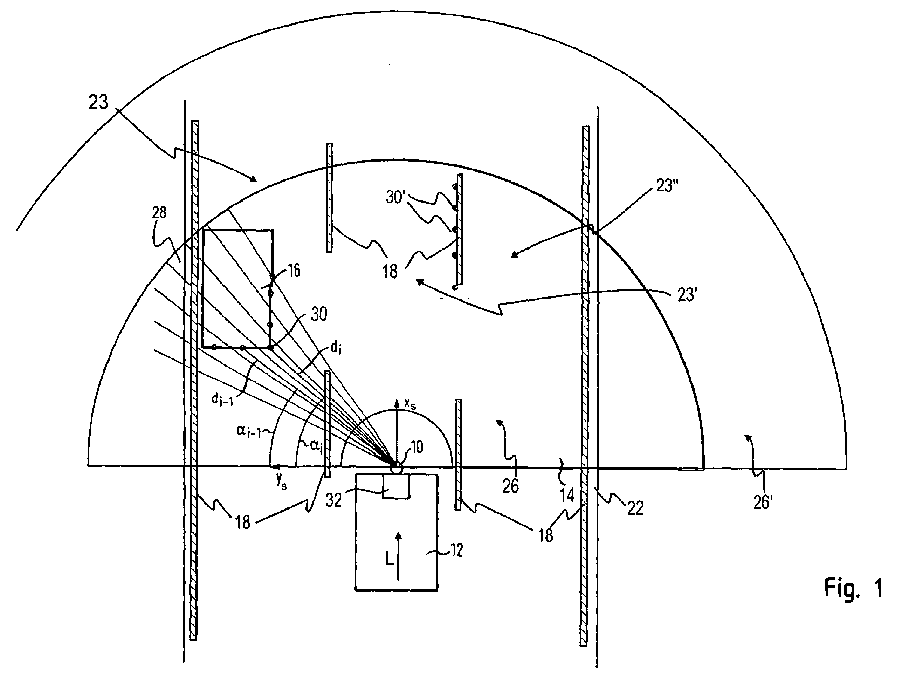

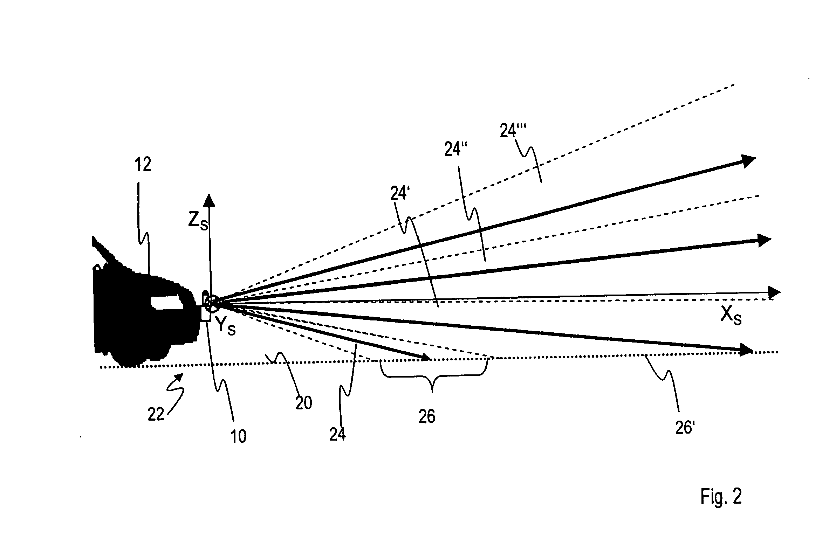

In Fig. 1 und Fig. 2 ist ein Laserscanner 10 an der Frontseite eines Fahrzeugs 12 montiert, um Gegenstände und den Boden vor dem Fahrzeug 12 zu erfassen. Der Laserscanner 10 weist einen in Fig. 1 nur teilweise gezeigten Gesamterfassungsbereich 14 auf, der aufgrund der Lage des Laserscanners symmetrisch zur Längsachse L des Fahrzeugs 12 einen Winkel von etwa 180° abdeckt. Der Gesamterfassungsbereich 14 ist in Fig. 1 und Fig. 2 nur schematisch und zur besseren Darstellung insbesondere in radialer Richtung zu klein dargestellt. In dem Gesamterfassungsbereich 14 befinden sich beispielhaft ein sich relativ zu dem Fahrzeug 12 bewegender Gegenstand 16, im Beispiel ein Fahrzeug, und strichförmige Fahrspurmarkierungen 18 auf einer Oberfläche 20 einer Fahrbahn 22 einer Straße, im Beispiel einer der beiden Fahrbahnen einer Autobahn mit zwei Fahrbahnen für je eine Fahrtrichtung.

Die aus einem beispielsweise retroreflektierenden Material bestehenden Fahrspurmarkierungen 18, die als Teil der Fahrbahnoberfläche 20 angesehen werden, sind entsprechend Vorgaben für deutsche Autobahnen angeordnet und ausgebildet. Sie bilden parallel verlaufende Fahrspuren 23, 23' und 23", die entsprechend den Vorgaben voneinander beabstandet sind.

Wie in den Fig. 1 und 2 schematisch dargestellt, setzt sich der Gesamterfassungsbereich 14 aus vier wenigstens näherungsweise aneinander grenzenden Teilerfassungsbereichen 24, 24', 24" und 24''' zusammen, die in einer Projektion auf die Fahrbahn 22 bzw. Fahrbahnoberfläche 20 (vgl. Fig. 1) die gleiche Form aufweisen und fächerartig gegeneinander geneigt sind (vgl. Fig. 2). Durch entsprechende Anbringung des Laserscanners 10 an dem Fahrzeug 12 wird erreicht, dass sich bei einer ebenen Fahrbahnoberfläche der Teilerfassungsbereich 24 und die Fahrbahnoberfläche 20 so schneiden, dass ein Abschnitt 26 der Fahrbahnoberfläche 20 mit der Form eines Ringsegments erfassbar ist. Weiter entfernte Anteile der Fahrbahn 22 sind über den Teilerfassungsbereich 24' erfassbar, der sich mit der Fahrbahnoberfläche 20 in einem Abschnitt 26' schneidet, der sich an den Abschnitt 26 anschließt. Der Innenrand des Abschnitts 26 hat dabei im Beispiel einen Abstand von etwa 10 m von dem Fahrzeug 12, so dass auch bei einer Nickbewegung des Fahrzeugs 12 immer der Abschnitt 26 der Fahrbahnoberfläche 20 erfassbar ist. Die Breiten der Abschnitte 26 und 26' sind in Fig. 1 und 2 nicht maßstabsgetreu zueinander wiedergegeben, insbesondere ist der Abschnitt 26' in Fig. 1 zu schmal dargestellt.

Der Laserscanner 10 tastet seinen Gesamterfassungsbereich 14 in vier, den Teilerfassungsbereichen 24, 24', 24" und 24''' entsprechenden Abtastebenen in grundsätzlich bekannter Weise mit einem mit konstanter Winkelgeschwindigkeit geschwenkten, gepulsten Laserstrahlungsbündel 28 mit einem strichförmigen Querschnitt ab, wobei ebenfalls umlaufend in konstanten Zeitabständen T zu Zeiten τᵢ in festen Winkelbereichen um einen mittleren Winkel αᵢ mittels vier übereinander angeordneter, in den Figuren nicht gezeigter Empfangselemente detektiert wird, ob das Laserstrahlungsbündel 28 von einem Punkt bzw. Bereich eines Gegenstands bzw. der Fahrbahnoberfläche in dem jeweiligen Teilerfassungsbereich 24, 24', 24", 24''' zurückgeworfen wird. Der Index i läuft dabei von 1 bis zur Anzahl der Winkelbereiche im Erfassungsbereich. Von diesen Winkelbereichen sind in Fig. 1 nur einzelne gezeigt, u. a. die den mittleren Winkeln αᵢ₋ₗ und αᵢ zugeordneten Winkelbereiche. Hierbei sind die Winkelbereiche zur deutlicheren Darstellung wiederum übertrieben groß gezeigt. Anhand der Laufzeit des Laserstrahlungspulses wird der Sensorabstand dᵢ des jeweils erfassten Gegenstandpunktes von dem Laserscanner 10 ermittelt. Der Laserscanner 10 erfasst daher in seinem xₛ- yₛ- Koordinatensystem als Koordinaten in einem Rohdatenelement für einen Gegenstandspunkt 30 auf der Oberfläche des Gegenstands 16 den Winkel αᵢ und den bei diesem Winkel festgestellten Abstand dᵢ, d.h. die Position des Gegenstandspunktes 30 in Polarkoordinaten relativ zu dem Fahrzeug 12. Entsprechendes gilt für Gegenstandspunkte 30' auf der Fahrbahnoberfläche 20. Bei einer Abtastung des Gesamterfassungsbereichs 14 werden von dem Laserscanner 10 somit geordnet nach aufsteigenden Polarwinkeln Rohdatenelemente mit Koordinaten (αᵢ, dᵢ) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. daraus, gegebenenfalls nach Korrektur der Daten und/oder Transformation in ein anderes Koordinatensystem, erhaltenen Abstands- bzw. Entfernungsbildpunkte für einen der Teilerfassungsbereiche 24, 24', 24" und 24''', im Folgenden einfach als Bildpunkte bezeichnet, bildet jeweils ein Abstandsbild des jeweiligen Teilerfassungsbereichs. Insbesondere können ein aus diesen Abstandsbildern zusammengesetztes Gesamtabstandsbild wie auch die einzelnen Abstandsbilder der Teilerfassungsbereiche Abstandsbilder im Sinne der Erfindung bilden.

Die Bildpunkte für jede Abtastebene werden dabei in der Reihenfolge der Erfassung, d.h. zunehmender Polarwinkel, abgespeichert.

Die Pulsform und Pulsamplitude der von dem Laserscanner 10 zur Abstandserfassung abgegebenen Pulse ist fest vorgegeben. Die als Echopulse von Gegenständen 16, der Fahrbahnoberfläche 20 und insbesondere einer Fahrspurmarkierung 18 zurückgeworfenen Pulse des Laserscanners 10 werden in den Empfangselementen des Laserscanners 10 empfangen. Dabei wird jeweils der Abstand zwischen dem Zeitpunkt, zu dem der Echopuls bzw. das entsprechende Signal des Empfangselements mit seiner ansteigender Flanke einen vorgegebenen Schwellwert überschreitet, und dem Zeitpunkt, zu dem der Echopuls bzw. das entsprechende Signal des Empfangselements mit seiner abfallenden Flanke den vorgegebenen Schwellwert unterschreitet, als Echopulsbreite ermittelt. Dieser Wert wird dem entsprechenden Abstandsbildpunkt zugeordnet, dessen Abstandswert über die Laufzeit des Pulses ermittelt wurde.

Der Laserscanner 10 tastet seinen Gesamterfassungsbereich 14 bzw. die Erfassungsbereiche 24, 24', 24" und 24''' jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Entfernungsbildpunkte weist der Laserscanner 10 eine Auswerteelektronik bzw. Datenverarbeitungseinrichtung 32 auf, die im Beispiel in dem Laserscanner 10 angeordnet ist, grundsätzlich aber auch davon abgesetzt angeordnet sein kann. Die Datenverarbeitungseinrichtung 32 weist u. a. einen zur Ausführung eines Verfahrens nach einer bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

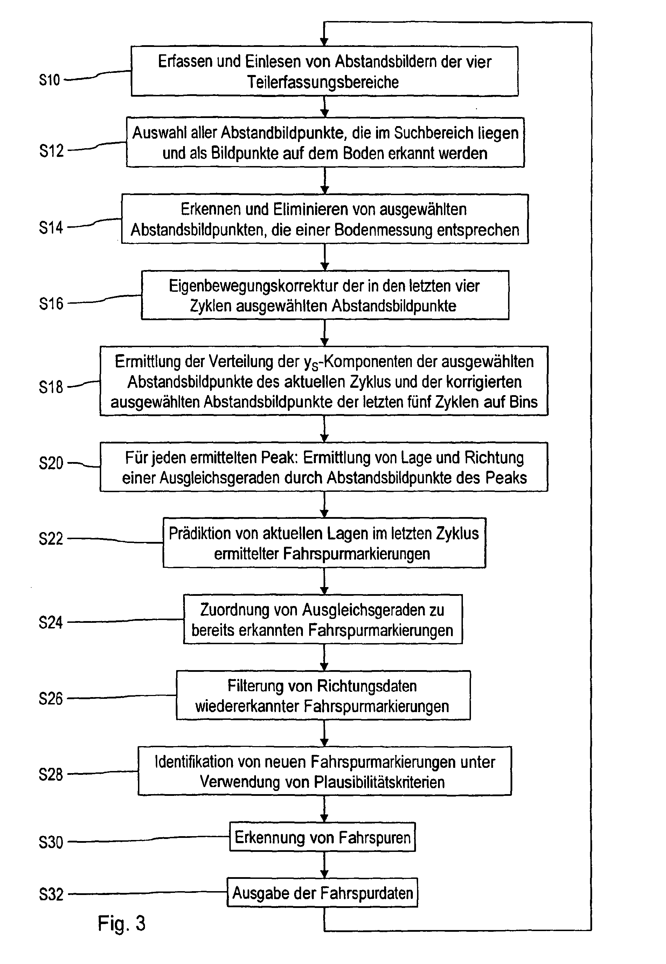

Ein Verfahren zur Erkennung von Fahrspurmarkierungen und insbesondere Fahrspuren nach einer ersten bevorzugten Ausführungsform der Erfindung ist schematisch als Ablaufdiagramm in Fig. 3 veranschaulicht. Zur einfacheren Beschreibung werden die Abstandsbildpunkte im Folgenden nur als Bildpunkte bezeichnet.

Bei diesem Verfahren wird davon ausgegangen, dass die Fahrspurmarkierungen näherungsweise entlang von Geraden verlaufen.

Das Verfahren läuft in Zyklen ab, wobei in aufeinander folgenden Zyklen die Schritte S 10 bis S32 ausgeführt werden.

In Schritt S 10 wird nach dem Erfassen eines neuen, durch vier Abstandsbilder der einzelnen Erfassungsbereiche 24, 24', 24" und 24''' gebildeten Gesamtabstandsbildes durch den Laserscanner 10 dieses Gesamtabstandsbild als aktuelles Gesamtabstandsbild eingelesen. In diesem Gesamtabstandsbild werden die Bildpunkte der einzelnen Abstandsbilder nicht mehr unterschieden, sondern nur als Bildpunkte des Gesamtabstandsbildes behandelt.

Nach einer Transformation der Bildpunkte des Gesamtabstandsbildes in ein kartesische Sensorkoordinatensystem mit Achsen Xₛ und Yₛ unter Berücksichtigung der Eigenbewegung, und insbesondere Eigengeschwindigkeit, des Fahrzeugs 12 und gegebenenfalls nach einer Korrektur der in dem Gesamtabstandsbild enthaltenen Bildpunktdaten wird in Schritt S 12 und S 14 eine Menge von Bildpunkten gebildet, die Punkten bzw. Bereichen auf der Fahrbahnoberfläche 20 bzw. dem Boden entsprechen sollen.

Als Elemente der Menge werden Abstandsbildpunkte nach mehreren Kriterien ausgewählt.

Zunächst werden als Elemente der Menge solche Bildpunkte des Gesamtabstandsbildes in Schritt S 12 ausgewählt, die unter Verwendung der den Bildpunkten des Gesamtabstandsbildes zugeordneten Echopulsbreiten und unter Verwendung des in der oben genannten deutschen Patentanmeldung DE 101 41 294 A1 beschriebenen Verfahrens zur Bodenerkennung als Punkten bzw. Bereichen auf dem Boden im Gesamterfassungsbereich 14 erkannt werden.

Weiterhin werden nur solche Bildpunkte ausgewählt, die das zusätzliche Kriterium erfüllen, dass deren Abstände von einer vorgegebenen Bezugskurve, im Beispiel eine Bezugsgerade, quer zur Längsrichtung des Fahrzeugs 12, im Beispiel der yₛ-Achse, innerhalb eines vorgegebenen Abstandsintervalls liegen. Genauer werden nur solche Bildpunkte ausgewählt, deren Komponenten der Lagen entlang der Längsrichtung L des Fahrzeugs 12, d.h. in xₛ-Richtung, Werte oberhalb eines unteren Grenzwertes von 10 m und unterhalb eines oberen Grenzwertes von 30 m, d.h. zwischen 10 m und 30 m, annehmen. Hierdurch werden nur solche Bildpunkte berücksichtigt, die auf der Oberfläche 20 des Fahrbahnabschnitts 26 liegen, auch wenn das Fahrzeug 12 Nickbewegungen ausführt, bei denen die Erfassungsbereiche 24, 24', 24" und 24''' relativ zu der Fahrbahnoberfläche 20 geschwenkt werden.

Um zu vermeiden, dass Bildpunkte zur Ermittlung der Fahrspurmarkierung verwendet werden, die quer zur Längsrichtung L des Fahrzeugs 12 entlang einer Kurve, entlang derer sich der Mittelstrahl des Laserstrahlungsbündels 28 bewegt, im Beispiel in einem schmalen Winkelbereich vor dem Fahrzeug 12 näherungsweise einer Geraden, angeordnet sind, aber nicht von Fahrspurmarkierungen in Fahrtrichtung bzw. Längsrichtung L des Fahrzeugs 12, sondern anderen Bereichen zurückgeworfen wurden, werden in Schritt S 14 darüber hinaus entlang einer Geraden quer zu der Längsrichtung L des Fahrzeugs 12 angeordnete, bisher ausgewählte Bildpunkte aus der Menge der ausgewählten Bildpunkten eliminiert. Dazu kann die Verteilung der Komponenten der auf der Basis der bereits genannten Kriterien ausgewählten Bildpunkte in Längsrichtung des Fahrzeugs 12 bzw. der Projektionen dieser Bildpunkte auf die Längsrichtung L, d.h. der xₛ-Komponenten, untersucht werden. Häufungen der Komponenten bzw. projizierten Bildpunkte, d.h. Peaks bzw. Spitzen der Verteilung, entsprechen dabei Bildpunkten, die entlang einer quer zur Längsrichtung L verlaufenden Geraden liegen.

Zur Ermittlung der Verteilung und der Peaks bzw. Häufungen wird der Bereich der koaxial mit der Längsrichtung L verlaufenden xs-Achse zwischen 10 m und 30 m in aneinander angrenzende Intervalle mit einer Länge von etwa 30 cm aufgeteilt. Zum Auffinden der Peaks der Verteilung wird dann für jedes Intervall die Anzahl der bisher ausgewählten Bildpunkte ermittelt, deren xₛ-Komponenten in dem Intervall liegen. Es werden dann relative Maxima sowie das absolute Maximum der Verteilung ermittelt, die dann die Lagen der jeweiligen Peaks bestimmen. Alle relativen Maxima der Verteilung, die einer Anzahl größer als eine vorgegebene Mindestanzahl, im Beispiel 10 Bildpunkte, entsprechen, und deren Wert einen Mindestanteil von im Beispiel wenigstens 40% des absoluten Maximums überschreitet, werden als Geraden entsprechend angesehen, die quer zu Längsrichtung L des Fahrzeugs 12 verlaufen. Die den Peaks um die Maxima entsprechenden Bildpunkte werden dann nicht als ausgewählte Bildpunkte behandelt bzw. aus der Menge der ausgewählten Bildpunkte eliminiert.

Die verbliebenen, so ausgewählten Abstandsbildpunkte werden dann zur Verwendung in den nächsten vier Zyklen abgespeichert.

In Schritt S 16 werden für die in den letzten vier vorhergehenden Zyklen ausgewählten Bildpunkte Eigenbewegungskorrekturen in Bezug auf Drehbewegungen des Fahrzeugs 12 durchgeführt, bei denen die Bildpunkte jeweils um einen Winkel um den Ursprung des Sensorkoordinatensystems gedreht werden, der dem Negativen des Winkels entspricht, der sich aus der Giergeschwindigkeit des Fahrzeugs 12 und der Dauer eines Zyklus bzw. der Zeit T ergibt. Die Giergeschwindigkeit kann dabei beispielsweise von einem Giergeschwindigkeitssensor des Fahrzeugs 12 oder durch eine Eigenbewegungsbestimmung auf der Basis von zeitlichen Folgen von Abstandsbildern ermittelt werden. Nach dieser Korrektur haben die ausgewählten Bildpunkte der letzten vier Zyklen in Bezug auf Drehungen wenigstens näherungsweise korrekte Koordinaten in dem aktuellen xs-ys-Koordinatensystem und sind so mit den aktuellen ausgewählten Bildpunkten zusammen verarbeitbar. Die korrigierten Koordinaten werden zur Verwendung in den nächsten Zyklen statt der bisherigen Koordinaten abgespeichert.

In den folgenden Schritten werden die in den Schritten S 12 bis S 16 erhaltenen, ausgewählten Bildpunkte des aktuellen Zyklus und die in Schritt S 16 korrigierten ausgewählten Bildpunkte der letzten vier Zyklen gemeinsam und ohne Unterschied verarbeitet, d.h. anschaulich in einer graphischen Darstellung in dem xₛ-yₛ-Koordinatensystem überlagert. Alle diese Bildpunkte werden im Folgenden einfach als ausgewählte Bildpunkte der fünf Zyklen bezeichnet.

In Schritt S 18 und S20 werden aus den ausgewählten Bildpunkten der fünf Zyklen Geraden, die Fahrspurmarkierungen entsprechen könnten, bzw. diese Geraden bestimmende Parameterwerte ermittelt. Dabei wird ausgenutzt, dass in dem Abstandsbereich von 10 m bis 30 m die meisten Fahrspurmarkierungen in guter Näherung als Geraden approximierbar sind, die näherungsweise in Richtung der Längsachse L des Fahrzeugs 12 bzw. in Fahrtrichtung des Fahrzeugs 12 verlaufen.

Zur Ermittlung der Abstandsbildpunkte, die Fahrspurmarkierungen entsprechen können, werden in Schritt S 18 Maxima in der Verteilung der Komponenten der ausgewählten Abstandsbildpunkte der fünf Zyklen in einer Richtung parallel zu einer Ermittlungskurve, im Beispiel einer Geraden quer zur Längsrichtung L des Fahrzeugs 12, d.h. deren Projektion auf die yₛ-Achse gesucht. Diese Maxima sollten Fahrspurmarkierungen entsprechen, die näherungsweise parallel zu der Längsachse L des Fahrzeugs verlaufen.

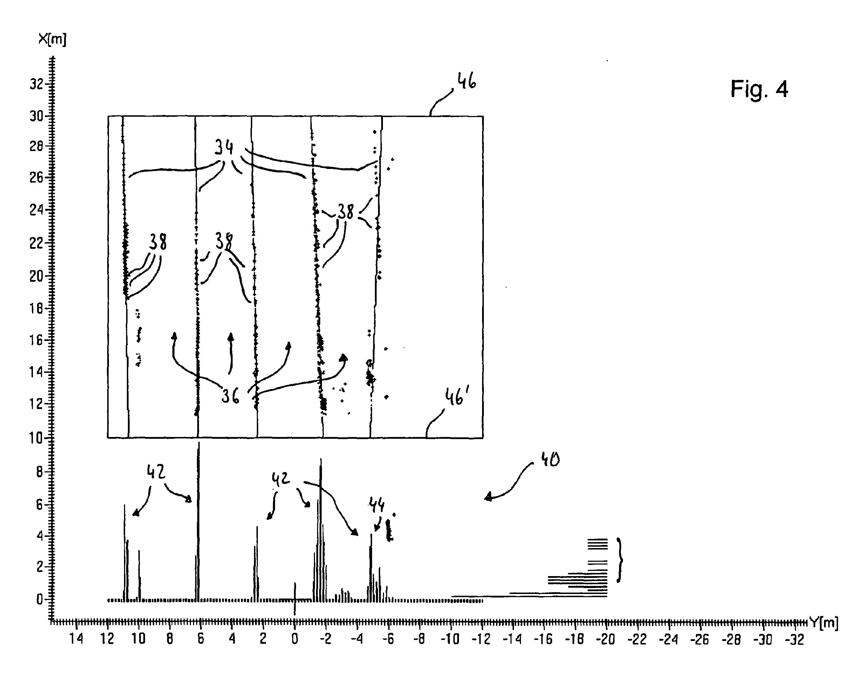

Dies ist in Fig. 4 veranschaulicht, in der entlang von Geraden 34 angeordnete, Fahrspuren 36 entsprechende ausgewählte Bildpunkte 38 eines Ausschnitts eines Gesamtabstandsbildes in dem xₛ-yₛ-Sensorkoordinatensystem gezeigt sind.

Hierzu wird die yₛ-Achse in aneinandergrenzende Intervalle aufgeteilt, die in der Statistik oft auch als Bins bezeichnet werden und deren Breite insbesondere in Abhängigkeit von dem Auflösungsvermögen des Laserscanners 10 für Gegenstandspunkte im Bereich von 10 m bis 30 m parallel zu der Längsrichtung L des Fahrzeugs 12 vor diesem gewählt ist. Im Beispiel beträgt die Breite etwa 30 cm.

Es werden dann für alle Intervalle die Anzahlen der Bildpunkte bestimmt, deren yₛ-Koordinaten bzw. -komponenten innerhalb des jeweiligen Intervalls liegen.

In einer graphischen Darstellung ergibt sich ein in Fig. 4 gezeigtes Histogramm 40, das klare Peaks bzw. relative Maxima 42 bei den Fahrspurmarkierungen entsprechenden Geraden 34 zeigt.

Die Maxima können mit verschiedenen Verfahren ermittelt werden, wobei eine Trennung von Rauschen bzw. nicht Fahrspurmarkierungen entsprechenden Abstandsbildpunkten erfolgen sollte. In diesem Ausführungsbeispiel werden zur Ermittlung der Maxima zunächst diejenigen Intervalle gesucht, in die die ys-Komponenten einer größeren Anzahl von Bildpunkten fallen, als in die beiden jeweils benachbarten Intervalle. Zur Unterscheidung dieser relativen Maxima 42 von nur durch Rauschen verursachten relativen Maxima werden nur solche relativen Maxima berücksichtigt, deren Höhe größer ist, als ein vorgegebener Anteil des absoluten Maximums der Verteilung, im Beispiel 30%.

Für jedes relative Maximum einschließlich des absoluten Maximums werden dann jeweils alle Bildpunkte in dem Peak bestimmt, der das Intervall mit dem jeweiligen relativen Maximum umfasst. Dazu werden jeweils ausgehend von dem Intervall mit dem relativen Maximum alle direkt aufeinanderfolgenden Intervalle bestimmt, deren Anzahlen der jeweils in diese fallenden Projektionen der Bildpunkte bzw. ys-Komponenten den vorgegebenen Anteil des absoluten Maximums überschreiten. Alle Bildpunkte, deren ys-Komponenten in diesen Intervallen liegen, d.h. alle dem Peak zugerechneten Bildpunkte werden als einer Geraden entsprechend angesehen.

In Fig. 4 sind die Anzahlen in den Intervallen rechts und links des Intervalls mit dem relativen Maximum 44 rechts neben dem Histogramm 40 durch Strecken veranschaulicht, deren Länge jeweils der Anzahl der Bildpunkte für das Intervall entspricht. Die durch die geschweifte Klammer bezeichneten Strecken bzw. entsprechenden Intervalle bzw. genauer die diesen entsprechenden Bildpunkte der fünf Zyklen werden dem Peak mit dem relativen Maximum 44 zugeordnet.

Für jeden der Peaks wird dann in Schritt S20 für die diesen zugeordneten Bildpunkte eine lineare Regression durchgeführt, bei der eine Steigung und ein ys-Achsenabschnitt, d.h. der Schnittpunkt einer Regressionsgeraden mit der ys-Achse, ermittelt und abgespeichert werden, die eine entsprechende Gerade definieren.

Weiterhin wird die Streuung der zur linearen Regression verwendeten Bildpunkte um die Gerade bzw. die Standardabweichung der linearen Regression ermittelt. Diese kann als Schätzung für die Breite der Fahrspurmarkierung verwendet werden.

In einem anderen Ausführungsbeispiel wird, sobald verfügbar, als Ermittlungskurve eine parallel zu den gemittelten Richtungen der in dem letzten Zyklus erkannten Fahrspurmarkierungen verlaufende Gerade verwendet.

Die so ermittelten Geraden können Fahrspurmarkierungen entsprechen, jedoch können in Ausnahmesituationen auch Geraden ermittelt werden, die nicht Fahrspurmarkierungen entsprechen. Daher wird in den Schritten S22 bis S28 eine Erkennung und Verfolgung von Fahrspurmarkierungen ausgeführt, die vorteilhaft aber für das erfindungsgemäße Verfahren nicht zwingend notwendig ist.

Dazu werden die Daten in dem letzten Zyklus ermittelter Fahrspurmarkierungen gespeichert.

Die Fahrspurmarkierungen und die entsprechenden Objekte des Verfolgungsverfahrens werden im Folgenden der Einfachheit halber terminologisch nicht auseinander gehalten.

In Schritt S22 werden als Vorhersage der Lagen der Fahrspurmarkierungen im aktuellen Zyklus Geraden verwendet, die durch die gespeicherten Steigungen und yₛ-Achsenabschnitte aller derjenigen Geraden im letzten Zyklus gegeben sind, die als Fahrspurmarkierungen entsprechend erkannt wurden.

Als Suchbereich für mögliche zu erwartende Lagen der Fahrspurmarkierungen bzw. im aktuellen Zyklus werden dann jeweils Intervallpaare auf zu der yₛ-Achse parallelen Hilfsachsen 46 und 46' im Abstand von 10 m und 30 m von der yₛ-Achse ermittelt, in denen eine der aktuell ermittelten Geraden diese Hilfsachsen 46, 46' schneiden muss, wenn diese der entsprechenden bereits erkannten Fahrspurmarkierung entsprechen soll. Diese Intervalle weisen im Beispiel eine Breite von 1 m auf, wobei ihr Mittelpunkt jeweils als Schnittpunkt einer durch die gespeicherte Steigung und den gespeicherten yₛ-Achsenabschnitt definierten Geraden mit jeweils einer der Hilfsachsen 46, 46' ermittelt wird. Diese Intervalle dienen als Vorhersage der Lage der Fahrspurmarkierungen bzw. entsprechender Objekte im aktuellen Zyklus.

Zur Zuordnung von ermittelten Geraden bzw. entsprechenden Bildpunkten zu bereits erkannten Fahrspurmarkierungen wird in Schritt S24 für jede ermittelte Gerade jeweils für alle Fahrspurmarkierungen des letzten Zyklus, d.h. alle Intervallpaare geprüft, ob eine in den Schritten S 18 und S20 neu ermittelte Gerade die beiden Hilfsachsen in beiden Intervallen eines Intervallpaars schneidet. Ist dies der Fall, so wird die neue Gerade als entsprechende Fahrspurmarkierung wiedererkannt.

Nachdem diese Prüfung und gegebenenfalls die Zuordnung für alle in den Schritten S18 und S20 ermittelten Geraden durchgeführt wurde, werden in Schritt S26 die neu ermittelten Steigungen mittels eines Kalman-Filters gefiltert und der gefilterte Wert zur Ermittlung von Intervallpaaren im nächsten Zyklus gespeichert. Entsprechendes erfolgt für die yₛ-Achsenabschnitte. Es ergeben sich so geschätzte Lagen der Fahrspurmarkierungen im aktuellen Zyklus.

In Schritt S28 wird geprüft, welche der in Schritt S24 noch nicht einer Fahrspurmarkierung zugeordneten Geraden bzw. entsprechenden ausgewählten Bildpunkte der fünf Zyklen einer neuen Fahrspurmarkierung entsprechen könnte. Hierzu werden Plausibilitätskriterien verwendet. Beispielsweise kann als Plausibilitätskriterium verwendet werden, dass entlang einer Geraden angeordnete Bildpunkte nur dann einer Fahrspurmarkierung entsprechen, wenn diese einen vorgegebenen Mindestabstand von beispielsweise 2 m von einer anderen Fahrspurmarkierung aufweisen. Alternativ oder zusätzlich kann als Kriterium verwendet werden, dass die Fahrspurmarkierungen näherungsweise parallel verlaufen sollten und daher die Fahrspurmarkierungen und die in den Schritten S18 und S20 ermittelten Geraden einen Winkel mit einem Betrag kleiner als ein vorgegebener Grenzwinkel von beispielsweise 10° einschließen.

Die Steigungen und yₛ-Achsenabschnitte von so als jeweils einer Fahrspurmarkierung entsprechend erkannten Geraden werden dann als Daten für geschätzte Lagen der Fahrspurmarkierungen abgespeichert, wobei entsprechende Kalman-Filter initialisiert werden.

In Schritt S30 wird dann auf der Basis der ermittelten Fahrspurmarkierungen eine Fahrspurerkennung durchgeführt. Eine Fahrspur wird nur erkannt, wenn zwei benachbarte Fahrspurmarkierungen näherungsweise parallel verlaufen, d.h. die entsprechenden Geraden einen Winkel von weniger als beispielsweise 5° einschließen, und einen mittleren Abstand von im Beispiel zwischen 3 m und 5 m aufweisen, was den Vorgaben des deutschen Straßenverkehrsrechts entspricht. Weiterhin wird verwendet, dass nur bestimmte Kombinationen von Fahrspuren auftreten können. Schließlich kann noch die Breite der Fahrspurmarkierungen verwertet werden, die sich aus der Streuung der entlang einer einer Fahrspurmarkierung entsprechenden Geraden angeordneten Bildpunkte um diese Gerade entspricht. Aus den Lagen und Richtungen der ermittelten Fahrspurmarkierungen können so die Lagen und Richtungen der entsprechenden Fahrspuren ermittelt werden.

In diesem Schritt kann auch noch auf der Basis der ermittelten Anzahl und Breite von Fahrspuren eine Klassifikation der Fahrspuren und der Straße erfolgen. Im Beispiel wird aufgrund der Breite der Fahrspuren von mehr als 4 m und der Anzahl von drei Fahrspuren auf eine Autobahn geschlossen.

Die Lagen und Richtungen der ermittelten Fahrspuren und/oder Fahrspurmarkierungen und gegebenenfalls die Klasse der Straße werden dann in Schritt S32 zur Verwendung durch andere Programme oder Einrichtungen gespeichert bzw. ausgegeben.

Ein Verfahren zur Erkennung von Fahrspurmarkierungen und insbesondere durch Fahrspurmarkierungen gegebene Fahrspuren nach einer zweiten bevorzugten Ausführungsform der Erfindung unterscheidet sich von dem Verfahren des ersten Ausführungsbeispiels dadurch, dass die Ermittlung von entlang von Geraden liegenden, ausgewählten Bildpunkten in den Schritte S18 und S20 in anderer Weise erfolgt, als im ersten Ausführungsbeispiel.

Alle anderen Schritte entsprechen denen des ersten Ausführungsbeispiels, so dass die Erläuterungen zu diesen Schritten auch hier gelten.

Weiterhin unterscheidet sich die entsprechende Vorrichtung zur Erkennung von Fahrspurmarkierungen und insbesondere durch Fahrspurmarkierungen gegebene Fahrspuren nach einer zweiten bevorzugten Ausführungsform von der des ersten Ausführungsbeispiels nur dadurch, dass die Datenverarbeitungseinrichtung 32 zur Durchführung des Verfahrens nach der zweiten bevorzugten Ausführungsform der Erfindung ausgebildet ist.

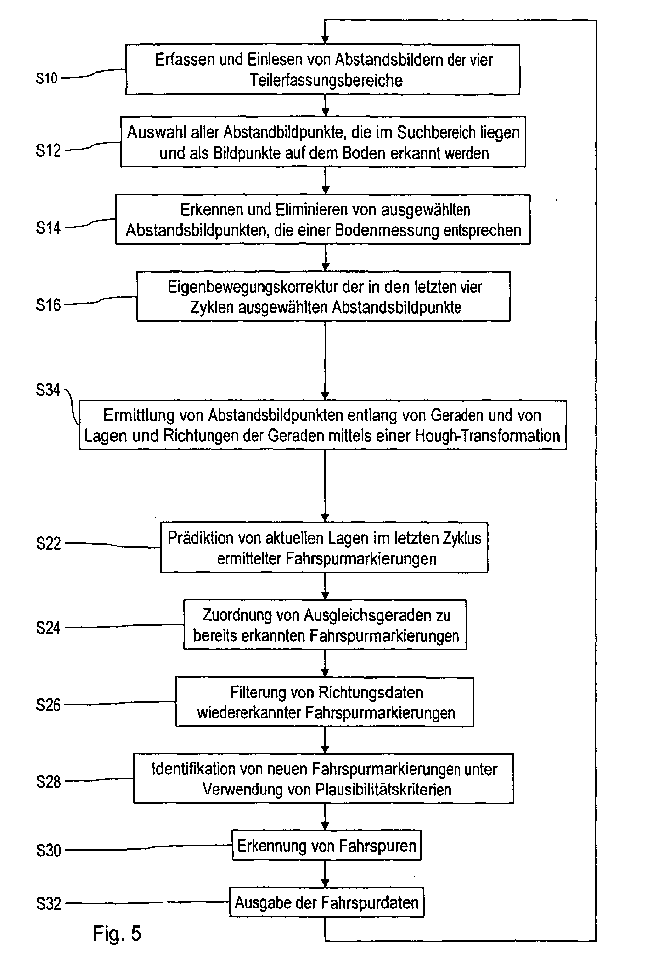

Wie in Fig. 5 veranschaulicht, wird statt der Schritte S18 und S20 in dem ersten Ausführungsbeispiel in dem neuen Schritt S34 für ausgewählte Bildpunkte des aktuellen Zyklus und die ausgewählten und korrigierten Bildpunkte der letzten vier vorhergehenden Zyklen eine Hough-Transformation zur Erkennung von Geraden durchgeführt. Eine konkret verwendbare Variante der Hough-Transformation ist beispielsweise auf den Seiten 294 bis 296 des Buches von Haberäcker, P., "Praxis der digitalen Bildverarbeitung und Mustererkennung", Hanser-Verlag, München 1995 beschrieben, dessen Inhalt insoweit hiermit durch Bezugnahme in die Beschreibung aufgenommen wird.

Als Ergebnisse der Hough-Transformation werden Steigungen und ys-Achsenabschnitte von Geraden erhalten, entlang denen Bildpunkte angeordnet sind.

Die weitere Auswertung erfolgt wie im ersten Ausführungsbeispiel.

Da bei der Hough-Tranformation Geraden unabhängig von deren Richtung ermittelt werden, kann bei einer alternativen, dritten Ausführungsform die Elimination von quer zu der Längsrichtung L des Fahrzeugs 12 entlang einer Geraden angeordneten Bildpunkten in Schritt S 14 weggelassen werden. Stattdessen werden dann von den bei der Hough-Transformation ermittelten Geraden nur solche verwendet, die mit der Längsrichtung L des Fahrzeugs 12 einen spitzen Winkel einschließen. Dies kann beispielsweise dadurch geschehen, dass nur Geraden mit Steigungen, deren Betrag einen vorgegebenen Grenzwert von beispielsweise 1 übersteigt, nicht als Fahrspurmarkierung angesehen werden.

Bei anderen Ausführungsbeispielen könnten beispielsweise statt der Geraden Parabeln ermittelt werden, die den Verlauf von möglichen Fahrspurmarkierungen wiedergeben könnten.

Bei den Ausführungsbeispielen können nicht für die Erkennung von Fahrspurmarkierungen ausgewählte Bildpunkte zur Durchführung einer Erkennung und Verfolgung von Objekten verwendet werden, die Gegenständen auf oder neben der Fahrbahn 22 entsprechen, wie beispielsweise anderen Fahrzeugen 16, Fußgängern usw..

Weiterhin kann in einer symmetrischen Anbaulage an dem Fahrzeug 12 eine Videokamera angebaut sein, deren Erfassungsbereich wenigstens die Erfassungsbereiche 24 und 24' des Laserscanners 10 umfasst. Eine in der Datenverarbeitungseinrichtung ablaufende Videobildverarbeitung erkennt die Fahrspurmarkierungen und ermittelt entsprechende Lagedaten in dem Videobild. Anhand der Lagen und Richtungen der auf der Basis der Abstandsbilder ermittelten Fahrspurmarkierungen und der Verläufe der Fahrspurmarkierungen in dem Videobild kann laufend überprüft werden, ob die Videokamera und der Laserscanner relativ zueinander korrekt justiert sind.

### Bezugszeichenliste

- 10: Laserscanner
- 12: Fahrzeug
- 14: Gesamterfassungsbereich
- 16: Gegenstand
- 18: Fahrspurmarkierungen
- 20: Oberfläche
- 22: Fahrbahn
- 23, 23', 23": Fahrspuren
- 24, 24', 24", 24''': Erfassungsbereiche
- 26, 26': Fahrbahnabschnitte
- 28: Laserstrahlungsbündel
- 30, 30': Gegenstandspunkte
- 32: Datenverarbeitungseinrichtung
- 34: Geraden
- 36: Fahrspuren
- 38: ausgewählte Abstandsbildpunkte
- 40: Histogramm
- 42: relative Maxima
- 44: relatives Maximum
- 46, 46': Hilfsachsen

## Patentansprüche

1. Verfahren zur Erkennung von Fahrspurmarkierungen (18) und insbesondere durch Fahrspurmarkierungen (18) gegebenen Fahrspuren (23, 23', 23", 36) auf einer Fahrbahn (22) auf der Basis von in zeitlicher Folge von wenigstens einem an einem Fahrzeug (12) gehaltenen Sensor (10) für elektromagnetische Strahlung, insbesondere einem Laserscanner, erfassten Abstandsbildern eines Erfassungsbereichs (14) des Sensors (10), den eine Oberfläche (20) der Fahrbahn (22) schneidet,
bei dem Fahrspurmarkierungen (18) entsprechende Abstandsbildpunkte (30', 38) wenigstens eines der Abstandsbilder ermittelt werden, und
eine Lage und/oder ein Verlauf der Fahrspurmarkierungen (18) und insbesondere der Fahrspuren (23, 23', 23", 36) auf der Basis der Fahrspurmarkierungen (18) entsprechenden Abstandsbildpunkte (30', 38) geschätzt werden,
**dadurch gekennzeichnet,**
**dass** die Verteilung der Lagen von zur Ermittlung von Fahrspurmarkierungen (18) ausgewählten Abstandsbildpunkten (30', 38) in Richtungen entlang einer nicht parallel zu einer Längsachse des Fahrzeugs (12) verlaufenden Ermittlungskurve ausgewertet wird.

2. Verfahren nach Anspruch 1,
**dadurch gekennzeichnet,**
**dass** zur Ermittlung von Markierungen (18) nur solche Abstandsbildpunkte (30', 38) verwendet werden, deren Abstand von einem in seiner Relativlage zu dem Sensor (10) festen Bezugspunkt oder einer quer zu einer Längsrichtung des Fahrzeugs (12) verlaufenden, in ihrer Relativlage zu dem Sensor (10) festen Bezugskurve jeweils einen vorgegebenen unteren Grenzwert überschreitet.

3. Verfahren nach Anspruch 1 oder 2,
**dadurch gekennzeichnet,**
**dass** zur Ermittlung von Markierungen (18) nur solche Abstandsbildpunkte (30', 38) verwendet werden, deren Abstand von einem in seiner Relativlage zu dem Sensor (10) festen Bezugspunkt oder einer quer zu einer Längsrichtung des Fahrzeugs (12) verlaufenden, in ihrer Relativlage zu dem Sensor (10) festen Bezugskurve einen vorgegebenen oberen Grenzwert unterschreitet.

4. Verfahren nach einem der vorhergehenden Ansprüche,
**dadurch gekennzeichnet,**
**dass** zur Ermittlung von Markierungen (18) nur Abstandsbildpunkte (30', 38) verwendet werden, die entsprechend wenigstens einem vorgegebenen Kriterium Punkten oder Bereichen auf der Fahrbahnoberfläche (20) oder Bodenbereichen neben der Fahrbahn (22) entsprechen.

5. Verfahren nach einem der vorhergehenden Ansprüche,
**dadurch gekennzeichnet,**
**dass** unter den Abstandsbildpunkten solche Abstandsbildpunkte ermittelt werden, die von dem Sensor (10) erfassten Punkten oder Bereichen auf der Fahrbahnoberfläche (20) entsprechen, die keine Markierungen (18) sind, und
**dass** die so ermittelten Abstandsbildpunkte nicht zur Erkennung der Markierungen (18) herangezogen werden.

6. Verfahren nach Anspruch 5,
**dadurch gekennzeichnet,**
**dass** die Abstandsbildpunkte durch Abtastung des Erfassungsbereichs (14) mit einem geschwenkten Strahlenbündel (28) elektromagnetischer Strahlung erhalten wurden, und dass zur Ermittlung der keiner Markierung entsprechenden Abstandsbildpunkte solche Abstandsbildpunkte ermittelt werden, die entlang einer Kurve auf der Fahrbahnoberfläche (20) angeordnet sind, auf der ein Mittelstrahl des Strahlenbündels (28) bei der Schwenkbewegung die Fahrbahnoberfläche (22) trifft.

7. Verfahren nach einem der vorhergehenden Ansprüche,
**dadurch gekennzeichnet,**
**dass** die Abstandsbilder durch Aussendung von elektromagnetischen Pulsen und Empfang entsprechender, von einem Gegenstand (16) und insbesondere der Fahrbahnoberfläche (20) oder einer Markierung (18) auf dieser zurückgeworfener Pulse ermittelt werden, wobei wenigstens einem Abstandsbildpunkt wenigstens eine Angabe in Bezug auf wenigstens eine von Eigenschaften des Gegenstands abhängige Eigenschaft des zurückgeworfenen Pulses zugeordnet ist, und
**dass** zur Ermittlung derjenigen Abstandsbildpunkte, die Markierungen (18) entsprechen, die wenigstens eine Eigenschaft des Pulses verwendet wird.

8. Verfahren nach Anspruch 7,
**dadurch gekennzeichnet,**
**dass** als Eigenschaft von zurückgeworfenen Pulsen deren Breite und/oder deren Höhe und/oder deren Fläche verwendet wird.

9. Verfahren nach einem der vorhergehenden Ansprüche,
**dadurch gekennzeichnet,**
**dass** wenigstens zwei Abstandsbilder von wenigstens zwei parallel oder in einem spitzen Winkel zueinander verlaufenden Erfassungsbereichen (24, 24') verwendet werden, die im Wesentlichen synchron erfasst wurden, und dass die Abstandsbildpunkte der beiden Abstandsbilder in Bezug auf die Markierungserkennung gemeinsam wie Abstandsbildpunkte eines einzigen Abstandsbildes behandelt werden.

10. Verfahren nach einem der vorhergehenden Ansprüche,
**dadurch gekennzeichnet,**
**dass** die Ermittlung von Markierungen (18) in aufeinander folgenden Zyklen erfolgt, und
**dass** zur Ermittlung der Markierung (18), in einem aktuellen Zyklus Abstandsbildpunkte von wenigstens zwei aufeinander folgenden Abstandsbildern verwendet werden.

11. Verfahren nach Anspruch 10,
**dadurch gekennzeichnet,**
**dass** wenigstens zur Ermittlung der Markierungen (18) ausgewählte Abstandsbildpunkte wenigstens eines der Abstandsbilder in Bezug auf eine Eigenbewegung des Fahrzeugs (12) relativ zu der Fahrbahn korrigiert werden.

12. Verfahren nach einem der vorhergehenden Ansprüche,
**dadurch gekennzeichnet,**
**dass** eine Form, die durch der Markierung entsprechende Abstandsbildpunkte gegeben ist, ermittelt und mit wenigstens einer vorgegebenen Form für Zeichen, insbesondere für Richtungen oder Geschwindigkeiten, verglichen wird.

13. Verfahren nach einem der vorhergehenden Ansprüche,
**dadurch gekennzeichnet,**
**dass** eine Form der Markierung, die durch der Markierung entsprechende Abstandsbildpunkte gegeben ist, ermittelt und daraufhin geprüft wird, ob sie eine Sperrfläche darstellt.

14. Verfahren nach einem der vorhergehenden Ansprüche,
**dadurch gekennzeichnet,**
**dass** zur Erkennung von Fahrspurmarkierungen (18) eine Hough-Transformation, vorzugsweise zur Bestimmung von Geraden, verwendet wird.

15. Verfahren nach einem der vorhergehenden Ansprüche,
**dadurch gekennzeichnet,**
**dass** die Ermittlungskurve eine quer zur Längsachse des Fahrzeugs (12) verlaufende Gerade ist.

16. Verfahren nach einem der vorhergehenden Ansprüche,
**dadurch gekennzeichnet,**
**dass** die Erkennung von Fahrspurmarkierungen (18) wiederholt in aufeinander folgenden Zyklen durchgeführt wird, und
**dass** eine Ermittlungskurve verwendet wird, die in einer Richtung quer zu wenigstens einer der Fahrspurmarkierungen (18) in einem vorhergehenden Zyklus verläuft.

17. Verfahren nach einem der vorhergehenden Ansprüche,
**dadurch gekennzeichnet,**
**dass** einer Fahrspurmarkierung (18) entsprechende Abstandsbildpunkte (30', 38) **dadurch** erkannt werden, dass Häufungen (40) von Projektionen von Abstandsbildpunkten (30', 38) auf die Ermittlungskurve ermittelt werden.

18. Verfahren nach Anspruch 17,
**dadurch gekennzeichnet,**
**dass** zur Ermittlung von Häufungen (40) die Anzahlen der Projektionen der Abstandsbildpunkte (30', 38) in vorgegebenen Intervallen entlang der Ermittlungskurve ermittelt werden.

19. Verfahren nach Anspruch 18,
**dadurch gekennzeichnet,**
**dass** eine einer Fahrspurmarkierung (18) entsprechende Häufung (40) festgestellt wird, wenn die Anzahl der Projektionen der Abstandsbildpunkte in einem Intervall ein lokales Maximum der Verteilung bildet und einen vorgegebenen Schwellwert übersteigt.

20. Verfahren nach Anspruch 18 oder 19,
**dadurch gekennzeichnet,**
**dass** eine einer Fahrspurmarkierung (18) entsprechende Häufung nur festgestellt wird, wenn die Differenz der Anzahlen der Projektionen der Abstandsbildpunkte (30', 38) in benachbarten Intervallen einen vorgegebenen Schwellwert überschreitet.

21. Verfahren nach einem der vorhergehenden Ansprüche,
**dadurch gekennzeichnet,**
**dass** wenigstens eine Menge von Abstandsbildpunkten (30', 38) ermittelt wird, die einer Fahrspurmarkierung (18) entsprechen könnte, und
**dass** unter Verwendung wenigstens eines Plausibilitätskriteriums entschieden wird, ob diese Menge der Abstandsbildpunkte einer Fahrspurmarkierung (18) zugeordnet wird.

22. Verfahren nach einem der vorhergehenden Ansprüche,
**dadurch gekennzeichnet,**
**dass** ergänzend eine digitale Karte zur Ermittlung wenigstens einer Fahrspurmarkierung (18) oder Fahrspur (23, 23', 23", 36) verwendet wird.

23. Verfahren nach einem der vorhergehenden Ansprüche,
**dadurch gekennzeichnet,**
**dass** für die Markierungen (18) eine Objektverfolgung auf der Basis der Abstandsbilder durchgeführt wird.

24. Verfahren nach Anspruch 23,
**dadurch gekennzeichnet,**
**dass** die Ermittlung von Markierungen (18) in aufeinander folgenden Zyklen erfolgt,
**dass** in einem aktuellen Zyklus eine Menge von Abstandsbildpunkten ermittelt wird, die einer Markierung (18) entsprechen könnten, dass auf der Basis der Lage und/oder Richtung eines in einem vorhergehenden Zyklus ermittelten, einer Markierung (18) entsprechenden Objekts die Lage der ermittelten Markierung (18) bzw. des Objekts in dem aktuellen Zyklus vorhergesagt wird, und
**dass** die Menge der Abstandsbildpunkte der ermittelten Markierung (18) bzw. dem Objekt zugeordnet wird, wenn die Abstandsbildpunkte der Menge oder der Wert wenigstens eines aus diesen ermittelten Parameters ein vorgegebenes Kriterium erfüllen.

25. Verfahren nach einem der vorhergehenden Ansprüche,
**dadurch gekennzeichnet,**
**dass** für wenigstens eine Fahrspurmarkierung (18) eine Breite ermittelt wird.

26. Verfahren nach einem der vorhergehenden Ansprüche,
**dadurch gekennzeichnet,**
**dass** für wenigstens eine ermittelte Fahrspurmarkierung ermittelt wird, ob diese durch eine durchgehende oder eine gestrichelte Linie gebildet wird.

27. Verfahren nach einem der vorhergehenden Ansprüche,
**dadurch gekennzeichnet,**
**dass** Klassen für Fahrspuren (23, 23', 23", 36) und/oder Straßen vorgegeben werden, und
**dass** wenigstens einer ermittelten Fahrspur (23, 23', 23", 36) und/oder einer Straße mit der ermittelten Fahrspur eine Klasse in Abhängigkeit von einer Eigenschaft der wenigstens einen ermittelten Fahrspur (23, 23', 23", 36) zugewiesen wird.

28. Verfahren nach Anspruch 27,
**dadurch gekennzeichnet,**
**dass** geprüft wird, ob ein Fahrspurwechsel erfolgt.

29. Verfahren nach einem der vorhergehenden Ansprüche,
**dadurch gekennzeichnet,**
**dass** in dem Abstandsbild Abstandsbildpunkte ermittelt werden, die einer quer zu einer Fahrspurmarkierung (18) verlaufenden Haltelinie entsprechen.

30. Verfahren nach einem der vorhergehenden Ansprüche,
**dadurch gekennzeichnet,**
**dass** auf der Basis erkannter Markierungen eine Kreuzung oder Einmündung erkannt wird.

31. Verfahren nach einem der vorhergehenden Ansprüche,
**dadurch gekennzeichnet,**
**dass** auf der Basis von aufeinander folgenden Abstandsbildern eines Bereichs wenigstens vor dem Fahrzeug (12) eine Erkennung und/oder Verfolgung von Objekten durchgeführt wird, und
**dass** aus dem Verlauf und/oder einer Eigenschaft der erkannten Fahrspurmarkierungen (18) und unter Verwendung von Lagen und/oder Eigenschaften zusätzlicher bei der Objekterkennung und/oder -verfolgung erkannter Objekte eine Erkennung von provisorischen Änderungen des Fahrspur- oder Straßenverlaufs, insbesondere Baustellen, durchgeführt wird.

32. Verfahren nach einem der vorhergehenden Ansprüche,
**dadurch gekennzeichnet,**
**dass** auf der Basis von aufeinander folgenden Abstandsbildern eines Bereichs wenigstens vor dem Fahrzeug (12) eine Erkennung und/oder Verfolgung von Objekten durchgeführt wird, und dass für anderen Fahrzeugen entsprechende Objekte geprüft wird, ob ein Spurwechsel wenigstens eines der anderen Fahrzuge erfolgt.

33. Verfahren nach einem der vorhergehenden Ansprüche,
**dadurch gekennzeichnet,**
**dass** in einem im Wesentlichen synchron mit einem Abstandsbild erfassten Videobild von dem zur Erkennung von Markierungen verwendeten Fahrbahnbereich wenigstens einer Markierung (18) entsprechende Merkmale ermittelt werden, und
**dass** auf der Basis der aus den Abstandsbildern ermittelten Lage der Markierung (18) und der Lage wenigstens eines entsprechenden Merkmals in wenigstens einem Videobild eine Relativlage und/oder - ausrichtung des Sensors zur Erfassung des Abstandsbildes zu einem Videobildsensor zur Erfassung des Entfernungsbildes überprüft und/oder ermittelt werden.

34. Computerprogramm mit Programmcode-Mitteln, um das Verfahren nach einem der Ansprüche 1 bis 33 durchzuführen, wenn das Programm auf einem Computer ausgeführt wird.

35. Computerprogrammprodukt mit Programmcode-Mitteln, die auf einem computerlesbaren Datenträger gespeichert sind, um das Verfahren nach einem der Ansprüche 1 bis 33 durchzuführen, wenn das Computerprogrammprodukt auf einem Computer ausgeführt wird.

36. Vorrichtung zur Erkennung von Fahrspurmarkierungen (18) auf einer Fahrbahn wenigstens vor einem Fahrzeug (12) mit mindestens einem optoelektronischen Sensor, vorzugsweise einem Laserscanner (10), und einer mit dem optoelektronischen Sensor (10) verbundenen Datenverarbeitungseinrichtung (32), die zur Durchführung eines Verfahrens nach einem der Ansprüche 1 bis 33 ausgebildet ist.

## Claims

1. A method for the recognition of lane markings (18) and in particular of lanes (23, 23', 23", 36) on a carriageway (22) set by lane markings (18) on the basis of spatial separation images of a detection region (14) of a sensor (10) for electromagnetic radiation held at a vehicle (12; said detection region (14) of the sensor (10) intersecting a surface (20) of the carriageway (22), said spatial separation images being detected in time sequence by at least one said sensor (10), in particular a laser scanner,
wherein spatial separation image points (30', 38) corresponding to lane markings (18) of at least one of the spatial separation images are determined; and
a position and/or a course of the lane markings (18) and in particular of the lanes (23, 23', 23", 36) is/are estimated on the basis of the spatial separation image points (30', 38) corresponding to lane markings (18),
**characterised in that**
the distribution of the positions of spatial separation image points (30', 38) selected for the determination of lane markings (18) is evaluated in directions along a determination curve not extending parallel to a longitudinal axis of the vehicle (12).

2. A method in accordance with claim 1, **characterised in that** only those spatial separation image points (30', 38) are used for the determination of markings (18) whose spacing from a reference point fixed in its relative position to the sensor (10) or from a reference curve extending transversely to a longitudinal direction of the vehicle (12) and fixed in its relative position to the sensor (10) in each case exceeds a preset lower limit value.

3. A method in accordance with claim 1 or claim 2, **characterised in that** only those spatial separation image points (30', 38) are used for the determination of markings (18) whose spacing from a reference point fixed in its relative position to the sensor (10) or from a reference curve extending transversely to a longitudinal direction of the vehicle (12) and fixed in its relative position to the sensor (10) falls below a preset upper limit value.

4. A method in accordance with any one of the preceding claims, **characterised in that** only spatial separation image points (30', 38) are used for the determination of markings (18) which, in accordance with at least one preset criterion, correspond to points or regions on the carriageway surface (20) or on ground regions next to the carriageway (22).

5. A method in accordance with any one of the preceding claims,
**characterised in that** those spatial separation image points are determined from among spatial separation image points which correspond to points or regions on the carriageway surface (20) detected by the sensor (10) which are not markings (18); and **in that** the spatial separation image points thus determined are not used for the recognition of the markings (18).

6. A method in accordance with claim 5, **characterised in that** the spatial separation image points were obtained by sampling the detection region (14) using a pivoted beam of rays (28) of electromagnetic radiation; and **in that** those spatial separation image points were determined for the determination of the spatial separation image points not corresponding to any marking which are arranged along a curve on the carriageway surface (20) on which a middle ray of the beam of rays (28) is incident on the carriageway surface (22) on the pivot movement.

7. A method in accordance with any one of the preceding claims, **characterised in that** the spatial separation images are determined by transmission of electromagnetic pulses and by reception of corresponding pulses reflected back from a real object (16) and in particular from a carriageway surface (20) or from a marking (18) thereon, with at least one indication with respect to at least one property of the pulse reflected back depending on properties of the real object being associated with at least one spatial separation image point; and **in that** the at least one property of the pulse is used for the determination of those spatial separation image points corresponding to markings (18).

8. A method in accordance with claim 7, **characterised in that** the width and/or the height and/or the area of pulses reflected back is/are used as the property of pulses reflected back.

9. A method in accordance with any one of the preceding claims, **characterised in that** at least two spatial separation images from at least two detection regions (25, 24') extending parallel or at an acute angle to one another are used which were detected substantially synchronously; and **in that** the spatial separation image points of the two spatial separation images are treated together with respect to the marking recognition as spatial separation image points of a single spatial separation image.

10. A method in accordance with any one of the preceding claims, **characterised in that** the determination of markings (18) takes place in sequential cycles; and **in that** spatial separation image points of at least two sequential spatial separation images are used in a then current cycle for the determination of the marking (18).

11. A method in accordance with claim 10, **characterised in that** selected spatial separation image points of at least one of the spatial separation images are corrected with respect to a movement of the vehicle (12) itself relative to the carriageway at least for the determination of the markings (18).

12. A method in accordance with any one of the preceding claims, **characterised in that** a shape given by spatial separation image points corresponding to the marking is determined and is compared with at least one preset shape for signs, in particular for directions or speeds.

13. A method in accordance with any one of the preceding claims, **characterised in that** a shape of the marking given by spatial separation image points corresponding to the marking is determined and a check is thereupon made whether it represents a barred area.

14. A method in accordance with any one of the preceding claims, **characterised in that** a Hough transformation, preferably for the determination of straight lines, is used for the recognition of lane markings (18).

15. A method in accordance with any one of the preceding claims, **characterised in that** the determination curve is a straight line extending transversely to the longitudinal axis of the vehicle (12).

16. A method in accordance with any one of the preceding claims, **characterised in that** the recognition of lane markings (18) is carried out repeatedly in sequential cycles; and **in that** a determination curve is used which extends in a direction transversely to at least one of the lane markings (18) in a preceding cycle.

17. A method in accordance with any one of the preceding claims, **characterised in that** spatial separation image points (30', 38) corresponding to a lane marking (18) are recognized **in that** clusters (40) of projections of spatial separation image points (30', 38) onto the determination curve are determined.

18. A method in accordance with claim 17, **characterised in that** the numbers of the projections of the spatial separation image points (30', 38) are determined at preset intervals along the determination curve for the determination of clusters (40).

19. A method in accordance with claim 18, **characterised in that** a cluster (40) corresponding to a lane marking (18) is determined when the number of projections of the spatial separation image points in an interval forms a local maximum of the distribution and exceeds a preset threshold value.

20. A method in accordance with claim 18 or claim 19, **characterised in that** a cluster corresponding to a lane marking (18) is only detected when the difference of the numbers of projections of the spatial separation image points (30', 38) in adjacent intervals exceeds a preset threshold value.

21. A method in accordance with any one of the preceding claims, **characterised in that** at least one quantity of spatial separation image points (30', 38) is determined which could correspond to a lane marking (18); and **in that** a decision is made using at least one plausibility criterion as to whether this quantity of spatial separation image points is associated with a lane marking (18).

22. A method in accordance with any one of the preceding claims, **characterised in that** a digital map is additionally used for the determination of at least one lane marking (18) or lane (23, 23', 23", 36).

23. A method in accordance with any one of the preceding claims, **characterised in that** an object tracking on the basis of the spatial separation images is carried out for the markings (18).

24. A method in accordance with claim 23, **characterised in that** the determination of markings (18) takes place in sequential cycles; **in that** a quantity of spatial separation image points which could correspond to a marking (18) is determined in a then current cycle; **in that** the position of the determined marking (18) or of the object in the then current cycle is predicted on the basis of the position and/or direction of an object determined in a preceding cycle and corresponding to a marking (18); and **in that** the quantity of the spatial separation image points is associated with the determined marking (18) or with the object when the spatial separation image points of the quantity or the value of at least one of these determined parameters satisfy a preset criterion.

25. A method in accordance with any one of the preceding claims, **characterised in that** a width is determined for at least one lane marking (18).

26. A method in accordance with any one of the preceding claims, **characterised in that** a determination is made for at least one determined lane marking whether it is formed by a throughgoing or a broken line.

27. A method in accordance with any one of the preceding claims, **characterised in that** classes are preset for lanes (23, 23', 23", 36) and/or roads; and **in that** a class is assigned to at least one of a determined lane (23, 23', 23", 36) and/or of a road having the determined lane in dependence on a property of the at least one determined lane (23, 23', 23", 36).

28. A method in accordance with claim 27, **characterised in that** a check is made whether a lane change has been made.

29. A method in accordance with any one of the preceding claims, **characterised in that** spatial separation image points are determined in the spatial separation image which correspond to a stop line extending transversely to a lane marking (18).

30. A method in accordance with any one of the preceding claims, **characterised in that** a crossroads or a junction is recognized on the basis of recognized markings.

31. A method in accordance with any one of the preceding claims, **characterised in that** a recognition and/or tracking of objects is carried out on the basis of sequential spatial separation images of a region at least in front of the vehicle (12); and **in that** a recognition of provisional changes to the course of the lane or of the road, in particular road works, is carried out from the course and/or from a property of the recognized lane markings (18) and using positions and/or properties of additional objects recognized on the object recognition and/or object tracking.

32. A method in accordance with any one of the preceding claims, **characterised in that** a recognition and/or tracking of objects is carried out on the basis of sequential spatial separation images of a region at least in front of the vehicle (12); and **in that** a check is made for objects corresponding to other vehicles whether a lane change of at least one of the other vehicles is taking place.

33. A method in accordance with any one of the preceding claims, **characterised in that** features corresponding to at least one marking (18) are determined in a video image of the carriage way region used for the recognition of markings substantially detected synchronously with a spatial separation image; and **in that** a relative position and/or a relative orientation of the sensor for the detection of the spatial separation image to a video image sensor for the detection of the distance image is checked and/or determined on the base of the position of the marking (18) determined from the spatial separation images and of the position of at least one corresponding feature in at least one video image.

34. A computer program with program code means to carry out the method in accordance with any one of the claims 1 to 33, when the program is installed on a computer.

35. A computer program product with program code means which are stored on a computer readable data carrier to carry out the method in accordance with any one of the claims 1 to 33, when the computer program product is installed on a computer.

36. A device for the recognition of lane markings (18) on a carriageway at least in front of a vehicle (12) having at least one optoelectronic sensor, preferably a laser scanner (10), and having a data processing device (32) which is connected to the optoelectronic sensor (10) and which is made for the carrying out of a method in accordance with any one of the claims 1 to 33.

## Revendications

1. Procédé pour reconnaître des marquages de voies (18), et en particulier des voies de circulation (23, 23', 23", 36) définies par des marquages de voies sur une chaussée (22) en se basant sur des images à séparation spatiale prises en succession temporelle par au moins un détecteur (10), monté sur un véhicule (12), pour rayonnement électromagnétique, en particulier un scanneur à laser, dans une zone de détection (14) du détecteur (10) qui recoupe une surface (20) de la chaussée (22),
dans lequel on détermine des pixels (30', 38) correspondant à des marquages de voies (18) dans au moins une des images à séparation spatiale, et
on estime une situation et/ou un tracé des marquages de voies (18) et en particulier des voies de circulation (23, 23', 23", 36) en se basant sur des pixels (30', 38) correspondant aux marquages des voies (18),
**caractérisé en ce que** la répartition des situations de pixels (30', 38) choisis pour déterminer les marquages de voies (18) est évaluée le long d'une courbe de détermination qui ne s'étend pas parallèlement à un axe longitudinal du véhicule (12).

2. Procédé selon la revendication 1,
**caractérisé en ce que** pour déterminer des marquages (18) on utilise uniquement ceux des pixels (30', 38) dont la distance vis-à-vis d'un point de référence fixe dans sa position relative par rapport au détecteur (10) ou vis-à-vis d'une courbe de référence fixe dans sa position relative par rapport au détecteur (10), qui s'étend perpendiculairement à une direction longitudinale du véhicule (12), passe respectivement au-dessus d'une valeur limite inférieure prédéterminée.

3. Procédé selon la revendication 1 ou 2,
**caractérisé en ce que** pour déterminer des marquages (18) on utilise uniquement ceux des pixels (30', 38) dont la distance vis-à-vis d'un point de référence fixe dans sa position relative par rapport au détecteur (10) ou vis-à-vis d'une courbe de référence fixe dans sa position relative par rapport au détecteur (10), qui s'étend perpendiculairement à une direction longitudinale du véhicule (12), passe au-dessous d'une valeur limite supérieure prédéterminée.

4. Procédé selon l'une des revendications précédentes,
**caractérisé en ce que** pour déterminer des marquages (18) on utilise uniquement des pixels (30', 38) qui, selon au moins un critère prédéterminé, correspondent à des points ou des zones sur la surface de la chaussée (20) ou à des zones au sol à côté de la chaussée (22).

5. Procédé selon l'une des revendications précédentes,
**caractérisé en ce que** parmi les pixels, on détermine ceux des pixels qui correspondent aux points ou aux zones, saisi(e)s par le détecteur (10), sur la surface de la chaussée (20) qui ne sont pas des marquages (18), et **en ce que** les pixels ainsi déterminés ne sont pas utilisés pour la reconnaissance des marquages (18).

6. Procédé selon la revendication 5,
**caractérisé en ce que** les pixels ont été obtenus par balayage de la zone de détection (14) avec un faisceau (28) de rayons électromagnétiques déplacé en pivotement, et **en ce que** pour déterminer les pixels qu'il ne correspondent à aucun marquage, on retient ceux des pixels qui sont agencés le long d'une courbe sur la surface de la chaussée (20) sur laquelle un rayon central du faisceau (28) de rayons tombe sur la surface de la chaussée (22) lors du mouvement de pivotement.

7. Procédé selon l'une des revendications précédentes,
**caractérisé en ce que**
les images à séparation spatiale sont déterminées par émission d'impulsions électromagnétiques et réceptions d'impulsions correspondantes renvoyées par un article (16) et en particulier par la surface de la chaussée (20) ou par un marquage (18) sur celle-ci, de sorte qu'au moins une indication se référant à au moins une propriété, en dépendance des propriétés de l'article, de l'impulsion renvoyée est associée à au moins un pixel, et
pour la détermination de ceux des pixels qui correspondent à des marquages (18), on utilise au moins une propriété de l'impulsion.

8. Procédé selon la revendication 7,
**caractérisé en ce que** l'on utilise à titre de propriété des impulsions renvoyées leur largeur et/ou leur hauteur et/ou leur surface.

9. Procédé selon l'une des revendications précédentes,
**caractérisé en ce que** l'on utilise au moins deux images à séparation spatiale d'au moins deux zones de détection (24, 24') s'étendant parallèlement ou sous un angle aigu l'une par rapport à l'autre, qui ont été prises essentiellement de manière synchrone, et **en ce que** les pixels des deux images à séparation spatiale sont traités conjointement, pour ce qui concerne la reconnaissance des marquages, comme des pixels d'une unique image à séparation spatiale.

10. Procédé selon l'une des revendications précédentes,
**caractérisé en ce que**
la détermination de marquages (18) a lieu dans des cycles mutuellement successifs, et
pour la détermination des marquages (18) on utilise dans un cycle actuel des pixels d'au moins deux images à séparation spatiale mutuellement successives.

11. Procédé selon la revendication 10,
**caractérisé en ce que**, au moins les pixels sélectionnés pour déterminer les marquages (18) dans une au moins des images à séparation spatiale sont corrigés pour ce qui concerne le mouvement propre du véhicule (12) par rapport à la chaussée.

12. Procédé selon l'une des revendications précédentes,
**caractérisé en ce que** l'on détermine une forme qui résulte des pixels correspondant aux marquages, et **en ce qu'**on la compare à au moins une forme prédéterminée pour des signes, en particulier pour des directions ou des vitesses.

13. Procédé selon l'une des revendications précédentes,
**caractérisé en ce que** l'on détermine une forme du marquage qui résulte des pixels correspondants aux marquages, et **en ce que** l'on vérifie ensuite si elle représente une surface interdite.

14. Procédé selon l'une des revendications précédentes,
**caractérisé en ce que** pour reconnaître des marquages de voies (18) on utilise une transformation de Hough, de préférence pour la détermination de droites.

15. Procédé selon l'une des revendications précédentes,
**caractérisé en ce que** la courbe de détermination est une droite qui s'étend perpendiculairement à l'axe longitudinal du véhicule (12).

16. Procédé selon l'une des revendications précédentes,
**caractérisé en ce que** la reconnaissance de marquages de voies (18) est exécutée à répétition dans des cycles mutuellement successifs, et
on utilise une courbe de détermination qui s'étend dans une direction perpendiculaire à au moins un des marquages de voie (18) dans un cycle précédent.

17. Procédé selon l'une des revendications précédentes,
**caractérisé en ce que** l'on reconnaît des pixels (30', 38) qui correspondent à un marquage de voie (18) du fait que l'on constate des accumulations (40) de projections de pixels (30', 38) sur la courbe de détermination.

18. Procédé selon la revendication 17,
**caractérisé en ce que** pour la constatation d'accumulations (40), on détermine les nombres des projections des pixels (30', 38) à intervalles prédéterminés le long de la courbe de détermination.

19. Procédé selon la revendication 18,
**caractérisé en ce que** l'on constate une accumulation (40) correspondant à un marquage de voie (18) quand le nombre des projections des pixels dans un intervalle forme un maximum local de la répartition et dépasse une valeur seuil prédéterminée.

20. Procédé selon la revendication 18 ou 19,
**caractérisé en ce que** l'on constate une accumulation correspondant à un marquage de voie (18) uniquement quand la différence des nombres des projections des pixels (30', 38) dans des intervalles voisins dépasse une valeur seuil prédéterminée.

21. Procédé selon l'une des revendications précédentes,
**caractérisé en ce que** l'on détermine au moins un groupe de pixels (30', 38) qui pourrait correspondre à un marquage de voie (18), et
en utilisant au moins un critère de plausibilité, on décide si ce groupe de pixels est associé à un marquage de voie (18).

22. Procédé selon l'une des revendications précédentes,
**caractérisé en ce que** l'on utilise en complément une carte numérique pour déterminer au moins un marquage de voie (18) ou une voie de circulation (23, 23', 23", 36).

23. Procédé selon l'une des revendications précédentes,
**caractérisé en ce que** l'on exécute pour les marquages (18) une poursuite d'objet en se basant sur les images à séparation spatiale.

24. Procédé selon la revendication 23,
**caractérisé en ce que** la détermination de marquages (18) a lieu dans des cycles mutuellement successifs,
**en ce que** l'on détermine dans un cycle actuel un groupe de pixels qui pourrait correspondre à un marquage (18),
**en ce qu'**en se basant sur la situation et/ou la direction d'un objet déterminé dans un cycle précédent et correspondant à un marquage (18), ont prédit la situation du marquage déterminé (18) ou de l'objet dans le cycle actuel, et
**en ce que** le groupe de pixels est associé au marquage déterminé (18) ou à l'objet déterminé quand les pixels du groupe ou la valeur d'au moins un paramètre déterminé à partir de ces pixels satisfont un critère prédéterminé.

25. Procédé selon l'une des revendications précédentes,
**caractérisé en ce que** pour au moins un marquage de voie (18) on détermine une largeur.

26. Procédé selon l'une des revendications précédentes,
**caractérisé en ce que** pour au moins un marquage de voie déterminé, on détermine si celui-ci est formé par une ligne continue ou par une ligne discontinue.

27. Procédé selon l'une des revendications précédentes,
**caractérisé en ce que** l'on donne au préalable des classes pour des voies de circulation (23, 23', 23", 36) et/ou pour des routes, et
**en ce que** l'on attribue à une route avec la voie de circulation déterminée une classe en fonction d'une propriété de ladite au moins une voie de circulation déterminée (23, 23', 23", 36).

28. Procédé selon la revendication 27,
**caractérisé en ce que** l'on vérifie s'il se produit un changement de voie de circulation.

29. Procédé selon l'une des revendications précédentes,
**caractérisé en ce que** l'on détermine dans l'image à séparation spatiale des pixels qui correspondent à une ligne d'arrêt s'étendant perpendiculairement à un marquage de voie (18).

30. Procédé selon l'une des revendications précédentes,
**caractérisé en ce qu'**en se basant sur les marquages reconnus on reconnaît un croisement ou une jonction.

31. Procédé selon l'une des revendications précédentes,
**caractérisé en ce qu'**en se basant sur des images à séparation spatiale mutuellement successives d'une zone au moins devant le véhicule (12), on exécute une reconnaissance et/ou une poursuite d'objets, et **en ce qu'**à partir du tracé et/ou d'une propriété des marquages de voie reconnus (18) et en utilisant les situations et/ou des propriétés d'objets supplémentaires reconnus lors de la reconnaissance et/ou de la poursuite d'objets, on exécute une reconnaissance de modification provisoire du tracé de la voie de circulation ou de la route, en particulier une reconnaissance de chantier.

32. Procédé selon l'une des revendications précédentes,
**caractérisé en ce qu'**en se basant sur des images à séparation spatiale mutuellement successives d'une zone au moins devant le véhicule (12), on exécute une reconnaissance et/ou une poursuite d'objets, et **en ce que** l'on vérifie avec des objets correspondant à d'autres véhicules, si l'un au moins des autres véhicules exécute un changement de voie.

33. Procédé selon l'une des revendications précédentes,
**caractérisé en ce que**
dans une image vidéo prise sensiblement de façon synchrone avec une image à séparation spatiale et concernant la zone de la chaussée utilisée pour la reconnaissance de marquages, on détermine des caractéristiques correspondant à au moins un marquage (18), et
en se basant sur la situation du marquage (18) déterminé à partir des images à séparation spatiale et sur la situation d'au moins une caractéristique correspondante, on vérifie et/ou on détermine dans au moins une image vidéo une position relative et/ou une orientation relative du détecteur pour détecter l'image à séparation spatiale par rapport à un détecteur d'images vidéo pour la prise de l'image à distance.

34. Programme d'ordinateur comprenant des moyens formant code de programme, pour mettre en oeuvre le procédé selon l'une des revendications 1 à 33, quand le programme est exécuté sur un ordinateur.

35. Produit formant programme d'ordinateur comprenant des moyens formant code de programme, qui sont stockés sur un support lisible à l'ordinateur, pour mettre en oeuvre le procédé selon l'une des revendications 1 à 33 quand le produit formant programme d'ordinateur est exécuté sur un ordinateur.

36. Appareil pour la reconnaissance de marquages de voie (18) sur une chaussée au moins devant un véhicule (12), comprenant au moins un détecteur optoélectronique, de préférence un scanneur à laser (10), et un système de traitement de données (32) connecté au détecteur optoélectronique (10), qui est réalisé pour mettre en oeuvre un procédé selon l'une des revendications 1 à 33.
